# EUROPEAN PATENT APPLICATION

(11) **EP 4 708 937 A1**
(43) Date of publication of application: **11.03.2026**
(21) Application number: 23937998.5
(22) Date of filing: 25.05.2023
(51) Int. Cl.: H04W 8/00

(54) **METHOD AND APPARATUS FOR COMMUNICATING RADIO ACCESS NETWORK WITH CORE NETWORK**

(71) Applicant: Huawei Technologies Co., Ltd., Shenzhen, Guangdong 518129 (CN)
(72) Inventor: WANG, Jun, Shenzhen, Guangdong 518129 (CN); PENG, Chenghui, Shenzhen, Guangdong 518129 (CN); WU, Shaoyun, Shenzhen, Guangdong 518129 (CN); XING, Weijun, Shenzhen, Guangdong 518129 (CN); WANG, Fei, Shenzhen, Guangdong 518129 (CN); LIU, Zhe, Shenzhen, Guangdong 518129 (CN); HUANG, Huanhuan, Shenzhen, Guangdong 518129 (CN)
(74) Representative: Thun, Clemens
(86) International application number: PCT/CN2023/096304
(87) International publication number: WO 2024/239325

(57) **Abstract**

Embodiments of this application provide a method for communication between a radio access network and a core network and a communication apparatus. The method includes: A first wireless network device obtains first indication information of a first control plane network function serving a terminal device, where the first control plane network function is a network function determined based on a second control plane network function. The first wireless network device communicates with the first control plane network function based on the first indication information. This avoids a delay caused by proxy processing or forwarding of the second control plane network function when the first wireless network device communicates with the first control plane network function via the second control plane network function. Therefore, signaling can be reduced, and communication efficiency can be improved.

## Description

### TECHNICAL FIELD

Embodiments of this application relate to the communication field, and more specifically, to a method for communication between a radio access network and a core network and a communication apparatus.

### BACKGROUND

In an existing radio access network (radio access network, RAN) architecture, for example, a 5th generation (5th generation, 5G) RAN architecture, a radio access network device is connected to only an access and mobility management function (access and mobility function, AMF) of a core network (core network, CN) on a control plane, and is not directly connected to another control plane (control plane, CP) network function (network function, NF) in the CN. Therefore, the AMF serves as a proxy to shield a CP NF connection and a signaling procedure in the CN for the radio access network.

An AMF proxy mechanism is simpler for the radio access network side, but causes a transmission delay. How to implement communication between the radio access network and the core network more efficiently is an urgent problem to be resolved.

### SUMMARY

Embodiments of this application provide a method for communication between a radio access network and a core network and a communication apparatus, so that the radio access network can directly communicate with a CP NF other than an AMF of the core network. Therefore, the communication between the radio access network and the core network is more efficiently implemented.

According to a first aspect, a method for communication between a radio access network and a core network is provided. The method may be performed by a first wireless network device, or may be performed by a chip or a circuit configured in the first wireless network device. This is not limited in this application.

The method includes: obtaining first indication information, where the first indication information indicates a first control plane network function serving a terminal device, and the first control plane network function is a network function determined based on a second control plane network function; and communicating with the first control plane network function based on the first indication information.

The first control plane network function and the second control plane network function are control plane function entities in the core network.

For example, the first control plane network function may include but is not limited to a session management function (session management function, SMF), a location management function (location management function, LMF), a policy control function (policy control function, PCF), and the like, and the second control plane network function may include but is not limited to an access and mobility management function (access and mobility Function, AMF), a network register function (network register function, NRF), and the like.

In this application, the first control plane network function and the second control plane network function are network functions allocated to the terminal device during initial registration of the terminal device, or may be initially allocated network functions that are found for the terminal device during non-initial registration of the terminal device. This is not limited in embodiments.

In this application, the first wireless network device is a wireless network device serving the terminal device, for example, an access network device.

In this technical solution, the first wireless network device may obtain the first indication information of the first control plane network function serving the terminal device, and communicate with the first control plane network function based on the first indication information. This avoids a delay caused by proxy processing or forwarding of the second control plane network function when the first wireless network device communicates with the first control plane network function via the second control plane network function. Therefore, the communication between the radio access network and the core network can be more efficiently implemented.

With reference to the first aspect, in an implementation of the first aspect, obtaining the first indication information includes: obtaining the first indication information locally or receiving the first indication information from a first network element, where the first indication information includes a first identifier of the terminal device and at least one of the following information: a type and/or an identifier of the first control plane network function, an address of the first control plane network function, and a session identifier corresponding to the first control plane network function, the first identifier indicates the terminal device, and the first network element includes one of the second control plane network function, the first control plane network function, the terminal device, a second wireless network device, and a network management network element.

The second wireless network device and the network management network element may be understood as network elements that have a capability of storing the first indication information and that store the first indication information. For example, the second wireless network device may be a neighboring wireless network device of the first wireless network device.

In this technical solution, the first wireless network device may obtain the first indication information from any network element that stores the first indication information, and the first indication information may be any information that can be used to communicate with the first control plane network function, such as the identifier, the address, or the type of the first control plane network function. This improves communication flexibility.

With reference to the first aspect, in an implementation of the first aspect, the first indication information is determined based on the first identifier, and the first identifier is sent to the first control plane network function based on the first indication information.

In this technical solution, the first wireless network device queries for the corresponding first control plane network function based on the first identifier, to determine first indication information corresponding to the first control plane network function, and sends the first identifier to the first control plane network function based on the first indication information.

With reference to the first aspect, in an implementation of the first aspect, address information and/or identification information of the first wireless network device are/is sent to the first control plane network function or the terminal device.

In this technical solution, the first wireless network device may indicate the address information or the identification information of the first wireless network device to the first control plane network function or the terminal device, where the address information or the identification information is used by the first control plane network function or the terminal device to initiate communication. For example, the first control plane network function initiates downlink communication and sends the first indication information to the first wireless network device.

With reference to the first aspect, in an implementation of the first aspect, the first indication information is stored.

In this technical solution, the first wireless network device may store the first indication information of the first control plane network function. For example, after the first wireless network device stores the first indication information, the first wireless network device determines, during communication, based on an identifier of a terminal device that requests communication and the first identifier in the first indication information, the first indication information of the corresponding first control plane network function, and sends an uplink message based on the first indication information.

With reference to the first aspect, in an implementation of the first aspect, a second identifier that is of the terminal device and that is sent by the second control plane network function is received, where the second identifier is a communication identifier that is determined by the first control plane network function for the terminal device and that is in a service range of the first control plane network function. A mapping relationship between a third identifier and the second identifier of the terminal device is determined, where the third identifier is a unique identifier that is of the terminal device and that is identifiable by the first wireless network device, and the mapping relationship is used by the first wireless network device to determine a context of the terminal device based on the second identifier.

In this application, the second identifier may be a CN NGAP ID.

In this application, the third identifier may be a temporary mobile subscriber identity (temporary mobile subscriber identity, TMSI).

In this technical solution, the first wireless network device obtains, via the second control plane network function, the second identifier allocated by the first control plane network function to the terminal device, and then associates the second identifier with the third identifier of the first wireless network device, so that the second identifier can be used in the uplink message, where the second identifier is used by the first control plane network function to determine the context of the terminal.

With reference to the first aspect, in an implementation of the first aspect, the second identifier is sent to the first control plane network function based on the mapping relationship between the third identifier and the second identifier, where the second identifier is used by the first control plane network function to determine the context corresponding to the terminal device.

In this technical solution, the first wireless network device associates the second identifier sent by the first control plane network function with the third identifier. In the uplink message, the first wireless network device may replace the third identifier with the second identifier, so that the second identifier is used by the first control plane network function to determine the context of the terminal.

With reference to the first aspect, in an implementation of the first aspect, a fourth identifier of the terminal device is sent to the first control plane network function via the second control plane network function, where the fourth identifier is a communication identifier that is allocated by the first wireless network device to the terminal device and that is in a service range of the first wireless network device, there is a mapping relationship between the fourth identifier and a fifth identifier of the terminal device, and the fifth identifier is an identifier that is of the terminal device and that is identifiable by the first control plane network function.

In this technical solution, the first wireless network device sends, to the first control plane network function via the second control plane network function, the fourth identifier allocated by the first wireless network device to the terminal device, where the fourth identifier is used by the first control plane network function to associate with the fifth identifier of the first control plane network function, so that the fourth identifier is used in a downlink message. The first wireless network device may determine, based on the fourth identifier, the context corresponding to the terminal device.

With reference to the first aspect, in an implementation of the first aspect, the fourth identifier sent by the first control plane network function is received; and the context corresponding to the terminal device is determined based on the fourth identifier.

In this technical solution, when the downlink message received by the first wireless network device carries the fourth identifier, the context corresponding to the terminal device may be determined based on the identifier.

With reference to the first aspect, in an implementation of the first aspect, a fifth identifier and a second identifier are received from the first control plane network function, where the second identifier is a communication identifier that is allocated by the first control plane network function to the terminal device and that is in a service range of the first control plane network function, and the fifth identifier is an identifier that is of the terminal device and that is identifiable by the first control plane network function; a first mapping relationship is determined, where the first mapping relationship includes a mapping relationship between a third identifier and the fifth identifier, the third identifier is a unique identifier that is of the terminal device and that is identifiable by the first wireless network device, and the fifth identifier is a unique identifier that is of the terminal device and that is identifiable by the first control plane network function; and a second mapping relationship between the second identifier and the third identifier is determined based on the fifth identifier, the second identifier, and the first mapping relationship.

In this application, the first mapping relationship may be obtained via the second control plane network function, or may be preconfigured or predefined. This is not limited in embodiments of this application.

In this technical solution, the first wireless network device may determine the mapping relationship between the second identifier and the third identifier by using the mapping relationship between the third identifier and the fifth identifier and the fifth identifier and the second identifier that are carried in a 1^{st} downlink message.

With reference to the first aspect, in an implementation of the first aspect, a context of the terminal device is determined based on the second mapping relationship; or a context of the terminal device is determined based on a fourth identifier, where the fourth identifier is a communication identifier that is allocated by the first wireless network device to the terminal device and that is in a service range of the first wireless network device.

In this technical solution, a downlink message received by the first wireless network device may carry only the second identifier, and the first wireless network device may find the context of the terminal device based on the determined second mapping relationship between the second identifier and the third identifier; or a downlink message carries the fourth identifier, and the first wireless network device determines the context of the terminal device based on the fourth identifier.

With reference to the first aspect, in an implementation of the first aspect, a third identifier and a fourth identifier of the terminal device are sent to the first control plane network function, where the third identifier is an identifier that is of the terminal device and that is identifiable by the first wireless network device, the fourth identifier is a communication identifier that is allocated by the first wireless network device to the terminal device and that is in a service range of the first wireless network device, the third identifier and the fourth identifier are used by the first control plane network function to determine a third mapping relationship between the fourth identifier and a fifth identifier based on a first mapping relationship, and the fifth identifier is a unique identifier that is of the terminal device and that is identifiable by the first control plane network function; and the fourth identifier and/or a second identifier are/is sent to the first control plane network function, where the second identifier is a communication identifier that is allocated by the first control plane network function to the terminal device and that is in a service range of the first control plane network function, the fourth identifier is used by the first control plane network function to determine a context of the terminal device based on the third mapping relationship, and the second identifier is used by the first control plane network function to determine the context of the terminal device.

In this technical solution, the first control plane network function may alternatively obtain the first mapping relationship between the third identifier and the fifth identifier. The first wireless network device includes the third identifier and the fourth identifier in an uplink message. The first control plane network function may determine the mapping relationship between the fourth identifier and the fifth identifier based on the first mapping relationship. The first wireless network device may include only the fourth identifier in a subsequent uplink message, where the fourth identifier is used by the first control plane network function to determine the context of the terminal device based on the third mapping relationship; or may include the second identifier, where the second identifier is used by the first control plane network function to determine the context of the terminal device.

With reference to the first aspect, in an implementation of the first aspect, a first message is received from the terminal device, where the first message is a radio resource control RRC message, the first message includes assistance information, and the assistance information includes at least one of the following: a type of the message, the type of the first control plane network function and/or a type of the second control plane network function, the identifier or the address of the first control plane network function and/or an identifier or an address of the second control plane network function, and the session identifier corresponding to the first control plane network function; and the first control plane network function and/or the second control plane network function are/is communicated with based on the assistance information.

In this technical solution, the terminal device includes the assistance information in a radio resource control layer uplink message, and the first wireless network device may determine, based on the assistance information, to send the uplink message to the first control plane network function or the second control plane network function. In other words, the first wireless network device may route the uplink message to different core network entities based on the assistance information.

With reference to the first aspect, in an implementation of the first aspect, a second message sent by the first control plane network function or the second control plane network function is received, where the second message includes the first identifier of the terminal device; and the second message is sent to the terminal device based on the first identifier of the terminal device.

In this technical solution, the first control plane network function includes identification information of the terminal device in a downlink message, and the first wireless network device may determine, based on the identification information of the terminal device, to send the downlink message to the terminal device. In other words, the first wireless network device may route the downlink message to different terminal devices based on the identification information of the terminal device.

With reference to the first aspect, in an implementation of the first aspect, when the terminal device stores the first indication information of the first control plane network function, the first network element is the terminal device; or when the terminal device does not store the first indication information, the first network element is the first control plane network function or the second control plane network function.

In this technical solution, the terminal device stores the first indication information of the first control plane network function, and the first wireless network device may obtain the first indication information via the terminal device. When the terminal device does not report the first identifier, the first wireless network device may obtain the first indication information via the first control plane network function or the second control plane network function. In other words, in different scenarios, the first wireless network device may obtain the first indication information in different manners.

According to a second aspect, a method for communication between a radio access network and a core network is provided. The method may be performed by a terminal device, or may be performed by a chip or a circuit configured in the terminal device. This is not limited in this application.

The method includes: obtaining first indication information, where the first indication information indicates a first control plane network function serving the terminal device, the first control plane network function is a network function determined based on a second control plane network function, the first indication information includes a first identifier of the terminal device and at least one of the following information: a type and/or an identifier of the first control plane network function, an address of the first control plane network function, and a session identifier corresponding to the first control plane network function, and the first identifier indicates the terminal device; and determining, based on the first indication information, the address or the identifier of the first control plane network function serving the terminal device.

For the first control plane network function, the second control plane network function, and a first wireless network device, refer to the first aspect. Details are not described again.

In this technical solution, the terminal device may determine the first indication information of the first control plane network function serving the terminal device.

With reference to the second aspect, in an implementation of the second aspect, obtaining the first indication information includes: receiving the first indication information from the first control plane network function, the second control plane network function, the first wireless network device, a second wireless network device, or a network management network element, where the first wireless network device is a wireless network device serving the terminal device.

In this application, the terminal device may alternatively obtain the first indication information that is stored locally. For example, when the terminal device enters an idle state from a connected state, the terminal device does not release a context of the terminal device.

In this technical solution, the terminal device may obtain the first indication information from any network element that stores the first indication information, and the first indication information may be any information that can be used to communicate with the first control plane network function, such as the identifier, the address, or the type of the first control plane network function. This improves communication flexibility.

With reference to the second aspect, in an implementation of the second aspect, when the first indication information is received from the first wireless network device or the second wireless network device, the method further includes: sending the first indication information to the first control plane network function or the second control plane network function.

In this technical solution, the terminal device may send, to a core network device, the first indication information obtained from the wireless network device, where the first indication information is used by the core network device to perform downlink communication with the terminal device.

With reference to the second aspect, in an implementation of the second aspect, when the terminal device enters the idle state or an inactive state from the connected state, the terminal device stores the first indication information.

In this technical solution, when the terminal device enters the idle state or the inactive state from the connected state, the terminal device does not release the context of the terminal device, and stores the first indication information related to the first control plane network function.

With reference to the second aspect, in an implementation of the second aspect, when the first indication information is received from the first control plane network function or the second control plane network function, the method further includes: sending the first indication information to the first wireless network device.

In this technical solution, the terminal device may send, to the first wireless network device, the first indication information obtained from the core network device, where the first indication information is used by the first wireless network device to perform uplink communication with the core network device.

With reference to the second aspect, in an implementation of the second aspect, address information and/or identification information of the first wireless network device in the first wireless network device are/is received; and the address information and/or the identification information of the first wireless network device are/is stored.

In this technical solution, the terminal device may receive, from the first wireless network device, the address information and/or the identification information sent by the terminal device, where the address information and/or the identification information is used for uplink communication.

With reference to the second aspect, in an implementation of the second aspect, a first message is sent to the first wireless network device, where the first message is a radio resource control RRC message, the first message includes assistance information, and the assistance information includes at least one of the following: a type of the message, the type of the first control plane network function and/or a type of the second control plane network function, the identifier or the address of the first control plane network function and/or an identifier or an address of the second control plane network function, and the session identifier corresponding to the first control plane network function.

In this technical solution, the terminal device includes the assistance information in a radio resource control RRC uplink message, and the first wireless network device may determine, based on the assistance information, to send the uplink message to the first control plane network function or the second control plane network function. In other words, the first wireless network device may route the uplink message to different core network entities based on the assistance information.

With reference to the second aspect, in an implementation of the second aspect, a second message from the first wireless network device is received, where the second message includes the first identifier of the terminal device.

In this technical solution, the first control plane network function or the second control plane network function includes identification information of the terminal device in a downlink message, and the first wireless network device may determine, based on the identification information of the terminal device, to send the downlink message to the terminal device. In other words, the first wireless network device may route the downlink message to different terminal devices based on the identification information of the terminal device.

According to a third aspect, a method for communication between a radio access network and a core network is provided. The method may be performed by a second control plane network function, or may be performed by a chip or a circuit configured in the second control plane network function. This is not limited in this application.

The method includes: obtaining first indication information, where the first indication information indicates a first control plane network function serving a terminal device, the first control plane network function is a network function determined based on the second control plane network function, the first indication information includes a first identifier of the terminal device and at least one of the following information: a type and/or an identifier of the first control plane network function, an address of the first control plane network function, and a session identifier corresponding to the first control plane network function, and the first identifier indicates the terminal device; and determining, based on the first indication information, the address of the first control plane network function serving the terminal device or the identifier of the first control plane network function.

For the first control plane network function, the second control plane network function, and a first wireless network device, refer to the first aspect. Details are not described again.

In this technical solution, the second control plane network function may determine the first indication information of the first control plane network function serving the terminal device.

With reference to the third aspect, in an implementation of the third aspect, the first indication information is sent to the first wireless network device or the terminal device.

With reference to the third aspect, in an implementation of the third aspect, address information and/or identification information of the first wireless network device are/is sent to the first control plane network function.

With reference to the third aspect, in an implementation of the third aspect, a second identifier of the terminal device is sent to the first wireless network device, where the second identifier is a communication identifier that is allocated by the first control plane network function to the terminal device and that is in a service range of the first control plane network function.

With reference to the third aspect, in an implementation of the third aspect, a fourth identifier of the terminal device is sent to the first control plane network function, where the fourth identifier is a communication identifier that is allocated by the first wireless network device to the terminal device and that is in a service range of the first wireless network device.

With reference to the third aspect, in an implementation of the third aspect, a mapping relationship between a third identifier of the terminal device and a fifth identifier of the terminal device is sent to the first wireless network device or the first control plane network function, where the third identifier is a unique identifier that is of the terminal device and that is identifiable by the first wireless network device, and the fifth identifier is a unique identifier that is of the terminal device and that is identifiable by the first control plane network function.

In this technical solution, the second control plane network function may indicate the mapping relationship between the third identifier of the terminal device and the fifth identifier of the terminal device to the first wireless network device or the first control plane network function, where the mapping relationship is used to construct a context of the terminal device in subsequent communication.

According to a fourth aspect, a method for communication between a radio access network and a core network is provided. The method may be performed by a first control plane network function, or may be performed by a chip or a circuit configured in the first control plane network function. This is not limited in this application.

The method includes: obtaining second indication information, where the second indication information indicates a first wireless network device serving a terminal device; and communicating with the first wireless network device based on the second indication information.

The first control plane network function is a network function determined based on a second control plane network function, and the first control plane network function and the second control plane network function are control plane network functions of a core network.

For the first control plane network function, the second control plane network function, and the first wireless network device, refer to the first aspect. Details are not described again.

In this technical solution, the first control plane network function may determine the second indication information of the first wireless network device serving the terminal device, and communicate with the first wireless network device based on the second indication information. This avoids a delay caused by proxy processing or forwarding of the second control plane network function when the first wireless network device communicates with the first wireless network device via the second control plane network function. Therefore, signaling can be reduced, and communication efficiency can be improved.

With reference to the fourth aspect, in an implementation of the fourth aspect, determining that the second indication information is served includes: obtaining the second indication information locally or receiving the second indication information from a second network element, where the second indication information includes at least one of the following: a first identifier of the terminal device and address information and/or identification information of the first wireless network device, the second network element includes one of the second control plane network function, the first wireless network device, the terminal device, a second wireless network device, or a network management network element, and the first identifier indicates the terminal device.

The second wireless network device and the network management network element may be understood as network elements that have a capability of storing the first indication information and that store the first indication information. For example, the second wireless network device may be a neighboring wireless network device of the first wireless network device.

In this technical solution, the first control plane network function may obtain first indication information from any network element that stores the second indication information, and the second indication information may be any information that can be used to communicate with the first wireless network device, such as an identifier or an address of the first wireless network device. This improves the communication flexibility.

With reference to the fourth aspect, in an implementation of the fourth aspect, the second indication information is stored.

In this technical solution, the first control plane network function may store the second indication information of the first wireless network device corresponding to the terminal device. For example, during communication, the first control plane network function determines the second indication information of the corresponding first wireless network device based on the identifier of the terminal device, and sends a downlink message based on the second indication information.

With reference to the fourth aspect, in an implementation of the fourth aspect, the first indication information is sent to the terminal device or the first wireless network device, where the first indication information includes the first identifier of the terminal device and at least one of the following information: a type and/or an identifier of the first control plane network function, an address of the first control plane network function, and a session identifier corresponding to the first control plane network function.

In this technical solution, the first control plane network function may indicate address information or identification information of the first control plane network function to the first wireless network device or the terminal device, where the address information or the identification information is used by the first wireless network device or the terminal device to initiate communication. For example, the terminal device initiates uplink communication and sends the first indication information to the first control plane network function.

With reference to the fourth aspect, in an implementation of the fourth aspect, a second identifier of the terminal device is sent to the first wireless network device, where the second identifier is a communication identifier that is allocated by the first control plane network function to the terminal device and that is in a service range of the first control plane network function.

In this application, the second identifier may be a CN NGAP ID.

In this application, a third identifier may be a TMSI.

In this technical solution, the first control plane network function sends, to the first wireless network device via the second control plane network function, the second identifier allocated to the terminal device, and then the first wireless network device associates the second identifier with the third identifier of the terminal, so that the second identifier can be used in an uplink message. The first control plane network function may determine a context of the terminal based on the second identifier, and the third identifier is a unique identifier that is of the terminal device and that is identifiable by the first wireless network device.

With reference to the fourth aspect, in an implementation of the fourth aspect, a fourth identifier of the terminal device is received from the first wireless network device, where the fourth identifier is a communication identifier that is allocated by the first wireless network device to the terminal device and that is in a service range of the first wireless network device; and a mapping relationship between the fourth identifier and a fifth identifier of the terminal device is determined, where the fifth identifier is a unique identifier that is of the terminal device and that is identifiable by the first control plane network function, and the mapping relationship is used by the first control plane network function to determine a context corresponding to the terminal device.

In this technical solution, the first wireless network device sends, to the first control plane network function via the second control plane network function, the fourth identifier allocated by the first wireless network device to the terminal device, and the first control plane network function associates the fourth identifier with the fifth identifier, so that the fourth identifier is used in a downlink message. The first wireless network device may determine, based on the fourth identifier, the context corresponding to the terminal device. Alternatively, the first wireless device uses the fifth identifier in an uplink message, and the first control plane network function determines, based on the mapping relationship and the fifth identifier, the context corresponding to the terminal device.

With reference to the fourth aspect, in an implementation of the fourth aspect, a third identifier and a fourth identifier of the terminal device are received from the first wireless network device, where the third identifier is a unique identifier that is of the terminal device and that is identifiable by the first wireless network device, and the fourth identifier is a communication identifier that is allocated by the first wireless network device to the terminal device and that is in a service range of the first wireless network device; a first mapping relationship is determined, where the first mapping relationship includes a mapping relationship between the third identifier and a fifth identifier, and the fifth identifier is a unique identifier that is of the terminal device and that is identifiable by the first control plane network function; and a third mapping relationship between the fourth identifier and the fifth identifier is determined based on the third identifier, the fourth identifier, and the first mapping relationship.

In this application, the first mapping relationship may be obtained via the second control plane network function, or may be preconfigured or predefined. This is not limited in embodiments of this application.

In this technical solution, the first control plane network function may determine the mapping relationship between the fourth identifier and the fifth identifier by using the mapping relationship between the third identifier and the fifth identifier and the third identifier and the fourth identifier that are carried in an uplink message.

With reference to the fourth aspect, in an implementation of the fourth aspect, a context of the terminal device is determined based on the third mapping relationship; or a context of the terminal device is determined based on a second identifier.

In this technical solution, an uplink message sent by the first wireless network device may carry only the fourth identifier, and the first control plane network function may find the context of the terminal device based on the determined third mapping relationship between the fourth identifier and the fifth identifier; or an uplink message carries the second identifier, and the first control plane network function may find the context of the terminal device based on the second identifier.

With reference to the fourth aspect, in an implementation of the fourth aspect, a fifth identifier and a second identifier are sent to the first wireless network device, where the second identifier is a communication identifier that is allocated by the first control plane network function to the terminal device and that is in a service range of the first control plane network function, the fifth identifier is an identifier that is of the terminal device and that is identifiable by the first control plane network function, the second identifier and the fifth identifier are used by the first wireless network device to determine a second mapping relationship between the second identifier and a third identifier, and the third identifier is an identifier that is of the terminal device and that is identifiable by the first wireless network device; and the second identifier or a fourth identifier is sent to the first wireless network device, where the fourth identifier is a communication identifier that is allocated by the first wireless network device to the terminal device and that is in a service range of the first wireless network device, the second identifier is used by the first wireless network device to determine a context of the terminal device based on the second mapping relationship, and the fourth identifier is used by the first wireless network device to determine the context of the terminal device.

In this technical solution, the first wireless network device may alternatively obtain a first mapping relationship between the third identifier and the fifth identifier. The first control plane network function includes the second identifier and the fifth identifier in a 1^{st} downlink message. The first wireless network device may determine the mapping relationship between the second identifier and the third identifier based on the first mapping relationship. The first control plane network function may include only the second identifier in a subsequent downlink message, where the second identifier is used by the first wireless network device to determine the context of the terminal device.

With reference to the fourth aspect, in an implementation of the fourth aspect, a first message sent by the first wireless network device is received, where the first message is a radio resource control RRC message and includes assistance information, and the assistance information includes at least one of the following: a type of the message, the type of the first control plane network function and/or a type of the second control plane network function, the identifier or the address of the first control plane network function and/or an identifier or an address of the second control plane network function, and the session identifier corresponding to the first control plane network function.

In this technical solution, the terminal device includes the assistance information in a radio resource control RRC uplink message, and the first wireless network device may determine, based on the assistance information, to send the uplink message to the first control plane network function or the second control plane network function. In other words, the first wireless network device may route the uplink message to different core network entities based on the assistance information.

With reference to the fourth aspect, in an implementation of the fourth aspect, a second message is sent to the first wireless network device, where the second message includes identification information of the terminal device; and the second message is sent to the terminal device based on the identification information of the terminal device.

In this technical solution, the first control plane network function or the second control plane network function includes the identification information of the terminal device in a downlink message, and the first wireless network device may determine, based on the identification information of the terminal device, to send the downlink message to the terminal device. In other words, the first wireless network device may route the downlink message to different terminal devices based on the identification information of the terminal device.

According to a fifth aspect, a method for communication between a radio access network and a core network is provided. The method may be performed by a first wireless network device, or may be performed by a chip or a circuit configured in the first wireless network device. This is not limited in this application.

The method includes: receiving a plurality of non-access stratum messages; and separately mapping the plurality of non-access stratum messages to at least two signaling radio bearers for transmission, where the plurality of non-access stratum messages have a correspondence with the signaling radio bearers.

In this application, the wireless network device may configure a plurality of signaling radio bearers for the terminal device, and indicate that the signaling radio bearers are used for non-access stratum (non-access stratum, NAS) transmission.

It should be noted that this solution is applicable to a scenario in which no AMF proxy is used for communication, and is also applicable to a scenario in which an AMF proxy is used for communication.

In this technical solution, the plurality of signaling radio bearers may be used for transmission of the NAS messages, and the NAS messages are mapped to different signaling radio bearers based on different NAS quality of service (Quality of Service, QoS) priorities, to provide differentiated NAS transmission assurance and meet different transmission requirements.

With reference to the fifth aspect, in an implementation of the fifth aspect, separately mapping the plurality of non-access stratum messages to different signaling radio bearers for transmission includes: determining, based on non-access stratum types and/or session identifiers, non-access stratum quality of service QoS flow identifiers corresponding to the plurality of non-access stratum messages; establishing one or more signaling radio bearers based on the non-access stratum QoS flow identifiers and a QoS mapping relationship; determining a mapping relationship between the plurality of non-access stratum messages and the signaling radio bearers based on a mapping relationship between the non-access stratum QoS flow identifiers and the signaling radio bearers; and separately mapping, based on the mapping relationship between the plurality of non-access stratum messages and the signaling radio bearers, the plurality of non-access stratum messages to corresponding signaling radio bearers for transmission.

The non-access stratum QoS flow identifier and the QoS mapping relationship may be preconfigured by a network device, or may be predefined in a protocol. This is not limited in embodiments of this application.

In this technical solution, the first wireless network device determines, based on the non-access stratum types and/or the session identifiers, non-access stratum QoS flow identifiers corresponding to different non-access stratum messages, and performs downlink signaling radio bearer mapping based on the non-access stratum QoS flow identifiers and the QoS mapping relationship, to map non-access stratum messages of different QoS levels to different signaling radio bearers for downlink transmission.

With reference to the fifth aspect, in an implementation of the fifth aspect, a fourth mapping relationship and a fifth mapping relationship are configured for the terminal device, where the fourth mapping relationship includes a correspondence between the non-access stratum types and/or the session identifiers and the non-access stratum QoS flow identifiers, and the fifth mapping relationship includes a correspondence between the non-access stratum QoS flow identifiers and the signaling radio bearers.

The fourth mapping relationship and the fifth mapping relationship may be preconfigured by the core network or the wireless network device for the terminal device, or may be predefined in a protocol. This is not limited in embodiments of this application.

In this technical solution, the first wireless network device may configure the two steps of mapping relationships for the terminal device, where the two steps of mapping relationships are used by the terminal device to map non-access stratum messages of different QoS levels to different signaling radio bearers for uplink transmission.

With reference to the fifth aspect, in an implementation of the fifth aspect, a sixth mapping relationship is configured for the terminal device, where the fourth mapping relationship includes a mapping relationship between the non-access stratum types and the signaling radio bearers.

In this technical solution, the first wireless network device may configure the one step of mapping relationship for the terminal device, where the one step of mapping relationship is used by the terminal device to map non-access stratum messages of different QoS levels to different signaling radio bearers for uplink transmission.

With reference to the fifth aspect, in an implementation of the fifth aspect, the non-access stratum type includes at least one of the following: a type of the non-access stratum message, a type of a core network function, an identifier or an address of the core network function, and a session identifier corresponding to the core network function.

According to a sixth aspect, a method for communication between a radio access network and a core network is provided. The method may be performed by a terminal device, or may be performed by a chip or a circuit configured in the terminal device. This is not limited in this application.

The method includes: receiving a fourth mapping relationship and a fifth mapping relationship that are sent by a first wireless network device or a first control plane network function, where the fourth mapping relationship includes a correspondence between a plurality of non-access stratum types and non-access stratum quality of service QoS flow identifiers, and the fifth mapping relationship includes a correspondence between the non-access stratum QoS flow identifiers and signaling radio bearers; and separately mapping a plurality of non-access stratum messages to different signaling radio bearers for transmission based on the fourth mapping relationship and the fifth mapping relationship.

According to a seventh aspect, a method for communication between a radio access network and a core network is provided. The method may be performed by a terminal device, or may be performed by a chip or a circuit configured in the terminal device. This is not limited in this application.

The method includes: receiving a sixth mapping relationship sent by a first wireless network device or a first control plane network function, where the sixth mapping relationship includes a mapping relationship between information about a plurality of non-access stratum types and signaling radio bearers; and separately mapping, based on the sixth mapping relationship, a plurality of non-access stratum messages to different signaling radio bearers for transmission.

According to an eighth aspect, a communication apparatus is provided. The apparatus may be a first wireless network device, may be a chip or a circuit configured in the first wireless network device, or may be a logic module or software that can implement all or a part of the first wireless network device. This is not limited in this application.

The apparatus includes: a processing unit, configured to obtain first indication information, where the first indication information indicates a first control plane network function serving a terminal device, and the first control plane network function is a network function determined based on a second control plane network function. The processing unit is configured to communicate with the first control plane network function based on the first indication information.

It should be understood that a specific process in which a transceiver unit and the processing unit of the apparatus perform the corresponding steps is described in detail in the first aspect. For beneficial effects of this aspect, refer to the first aspect. For brevity, details are not described herein again.

According to a ninth aspect, a communication apparatus is provided. The apparatus may be a terminal device, may be a chip or a circuit configured in the terminal device, or may be a logic module or software that can implement all or a part of the terminal device. This is not limited in this application.

The apparatus includes: a processing unit, configured to obtain first indication information, where the first indication information indicates a first control plane network function serving the terminal device, the first control plane network function is a network function determined based on a second control plane network function, the first indication information includes a first identifier of the terminal device and at least one of the following information: a type and/or an identifier of the first control plane network function, an address of the first control plane network function, and a session identifier corresponding to the first control plane network function, and the first identifier indicates the terminal device. The processing unit is further configured to determine, based on the first indication information, the address or the identifier of the first control plane network function serving the terminal device.

It should be understood that a specific process in which a transceiver unit and the processing unit of the apparatus perform the corresponding steps is described in detail in the second aspect. For beneficial effects of this aspect, refer to the second aspect. For brevity, details are not described herein again.

According to a tenth aspect, a communication apparatus is provided. The apparatus may be a second control plane network function, may be a chip or a circuit configured in the second control plane network function, or may be a logic module or software that can implement all or a part of the second control plane network function. This is not limited in this application.

The apparatus includes: a processing unit, configured to obtain first indication information, where the first indication information indicates a first control plane network function serving a terminal device, the first control plane network function is a network function determined based on the second control plane network function, the first indication information includes a first identifier of the terminal device and at least one of the following information: a type and/or an identifier of the first control plane network function, an address of the first control plane network function, and a session identifier corresponding to the first control plane network function, and the first identifier indicates the terminal device. The processing unit is further configured to determine, based on the first indication information, the address or the identifier of the first control plane network function serving the terminal device.

It should be understood that a specific process in which a transceiver unit and the processing unit of the apparatus perform the corresponding steps is described in detail in the third aspect. For beneficial effects of this aspect, refer to the third aspect. For brevity, details are not described herein again.

According to an eleventh aspect, a communication apparatus is provided. The apparatus may be a first control plane network function, may be a chip or a circuit configured in the first control plane network function, or may be a logic module or software that can implement all or a part of the first control plane network function. This is not limited in this application.

The apparatus includes: a processing unit, configured to determine second indication information of a first wireless network device serving a terminal device. The processing unit is further configured to communicate with the first wireless network device based on the second indication information.

It should be understood that a specific process in which a transceiver unit and the processing unit of the apparatus perform the corresponding steps is described in detail in the fourth aspect. For beneficial effects of this aspect, refer to the fourth aspect. For brevity, details are not described herein again.

According to a twelfth aspect, a communication apparatus is provided. The apparatus may be a first wireless network device, may be a chip or a circuit configured in the first wireless network device, or may be a logic module or software that can implement all or a part of the first wireless network device. This is not limited in this application.

The apparatus includes: a transceiver unit, configured to receive a plurality of non-access stratum messages; and a processing unit, configured to separately map the plurality of non-access stratum messages to at least two signaling radio bearers for transmission, where the plurality of non-access stratum messages have a correspondence with the signaling radio bearers.

It should be understood that a specific process in which the transceiver unit and the processing unit of the apparatus perform the corresponding steps is described in detail in the fifth aspect. For beneficial effects of this aspect, refer to the fifth aspect. For brevity, details are not described herein again.

According to a thirteenth aspect, a communication apparatus is provided. The apparatus may be a terminal device, may be a chip or a circuit configured in the terminal device, or may be a logic module or software that can implement all or a part of the terminal device. This is not limited in this application.

The apparatus includes: a transceiver unit, configured to receive a fourth mapping relationship and a fifth mapping relationship that are sent by a first wireless network device or a first control plane network function, where the fourth mapping relationship includes a correspondence between a plurality of non-access stratum types and non-access stratum quality of service QoS flow identifiers, and the fifth mapping relationship includes a correspondence between the non-access stratum QoS flow identifiers and signaling radio bearers; and a processing unit, configured to separately map a plurality of non-access stratum messages to different signaling radio bearers for transmission based on the fourth mapping relationship and the fifth mapping relationship.

It should be understood that a specific process in which the transceiver unit and the processing unit of the apparatus perform the corresponding steps is described in detail in the sixth aspect. For beneficial effects of this aspect, refer to the sixth aspect. For brevity, details are not described herein again.

According to a fourteenth aspect, a communication apparatus is provided. The apparatus may be a terminal device, may be a chip or a circuit configured in the terminal device, or may be a logic module or software that can implement all or a part of the terminal device. This is not limited in this application.

The apparatus includes: a transceiver unit, configured to receive a sixth mapping relationship sent by a first wireless network device or a first control plane network function, where the sixth mapping relationship includes a mapping relationship between information about a plurality of non-access stratum types and signaling radio bearers; and a processing unit, configured to separately map, based on the sixth mapping relationship, a plurality of non-access stratum messages to different signaling radio bearers for transmission.

It should be understood that a specific process in which the transceiver unit and the processing unit of the apparatus perform the corresponding steps is described in detail in the seventh aspect. For beneficial effects of this aspect, refer to the seventh aspect. For brevity, details are not described herein again.

According to a fifteenth aspect, this application provides a communication system, including a first wireless network device, a first control plane network function, and a second control plane network function. The first control plane network function is a network function determined based on the second control plane network function. The second control plane network function is configured to determine the first control plane network function serving a terminal device. The first wireless network device is configured to obtain first indication information, where the first indication information indicates the first control plane network function serving the terminal device. The first control plane network function is configured to obtain second indication information, where the second indication information indicates the first wireless network device serving the terminal device. The first wireless network device is further configured to communicate with the first control plane network function based on the first indication information. The first control plane network function is further configured to communicate with the first wireless network device based on the second indication information.

According to a sixteenth aspect, this application provides a processor, configured to perform the methods according to the foregoing aspects.

Unless otherwise specified, or if operations, such as sending and obtaining/receiving, related to the processor do not contradict actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to a seventeenth aspect, this application provides a communication apparatus. The apparatus includes: a memory, configured to store a program; and at least one processor, configured to execute a computer program or instructions stored in the memory, to perform the method according to any one of the foregoing aspects or the implementations of the foregoing aspects.

According to an eighteenth aspect, this application provides a computer-readable storage medium. The computer-readable medium stores program code to be executed by a device, and the program code includes the method according to any one of the foregoing aspects or the implementations of the foregoing aspects.

According to a nineteenth aspect, this application provides a computer program product including instructions. When the computer program product runs on a computer, the computer is enabled to perform the method according to any one of the foregoing aspects or the implementations of the foregoing aspects.

According to a twentieth aspect, this application provides a chip. The chip includes a processor and a communication interface. The processor reads, through the communication interface, instructions stored in a memory, to perform the method according to any one of the foregoing aspects or the implementations of the foregoing aspects.

Optionally, in an implementation, the chip further includes the memory. The memory stores a computer program or instructions. The processor is configured to execute the computer program or the instructions stored in the memory. When the computer program is executed or the instructions are executed, the processor is configured to perform the method according to any one of the foregoing aspects or the implementations of the foregoing aspects.

### BRIEF DESCRIPTION OF DRAWINGS

FIG. 1 is a diagram of a communication system 100 applicable to an embodiment of this application;
FIG. 2 is a diagram of an application architecture of a communication system applicable to an embodiment of this application;
FIG. 3 shows a protocol stack architecture applicable to an embodiment of this application;
FIG. 4 is a diagram of a communication architecture applicable to an embodiment of this application;
FIG. 5 is a diagram of a communication architecture applicable to an embodiment of this application;
FIG. 6 is a block diagram of a method 600 for communication between a radio access network and a core network according to an embodiment of this application;
FIG. 7 is a diagram of a method 700 for communication between a radio access network and a core network according to an embodiment of this application;
FIG. 8 is a diagram of a method 800 for communication between a radio access network and a core network according to an embodiment of this application;
FIG. 9A and FIG. 9B are a diagram of a method 900 for communication between a radio access network and a core network according to an embodiment of this application;
FIG. 10 is a diagram of a method 1000 for communication between a radio access network and a core network according to an embodiment of this application;
FIG. 11 is a schematic flowchart of accessing when a terminal device switches from an inactive state to a connected state;
FIG. 12 is a schematic flowchart of requesting reestablishment by a terminal device in a connected state;
FIG. 13A and FIG. 13B are a schematic flowchart of switching of both a wireless network device and a core network device;
FIG. 14 is a diagram of a communication apparatus 1400 according to an embodiment of this application; and
FIG. 15 is a diagram of a communication apparatus 1500 according to an embodiment of this application.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

A communication system applicable to this application is first briefly described below.

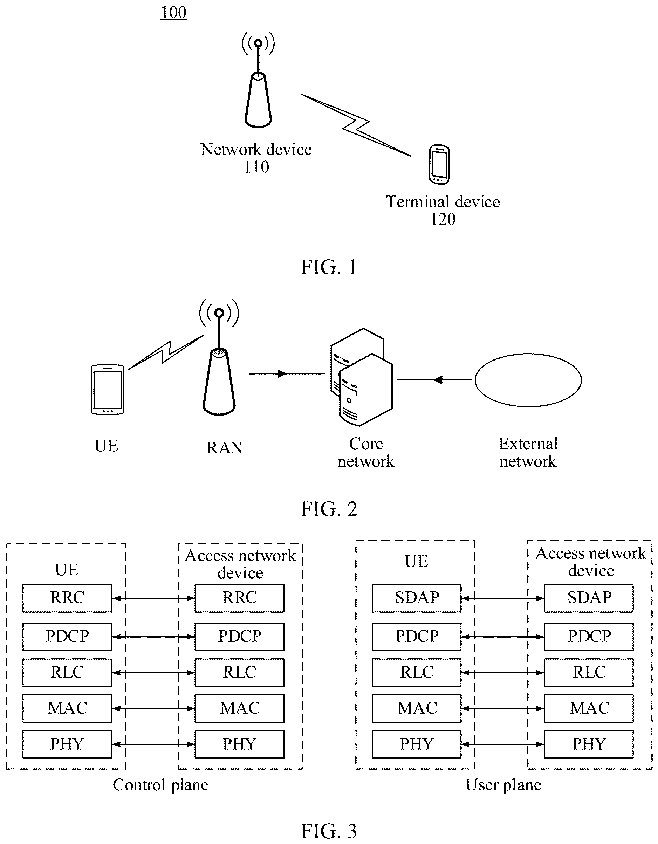

FIG. 1 is a diagram of a communication system 100 applicable to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other over a radio link. A plurality of antennas may be configured for each communication device, for example, the network device 110 or the terminal device 120. For each communication device in the communication system, the plurality of configured antennas may include at least one transmit antenna configured to send a signal and at least one receive antenna configured to receive a signal. Therefore, the communication devices in the communication system, for example, the network device 110 and the terminal device 120, may communicate with each other by using a multi-antenna technology.

It should be understood that FIG. 1 is merely a simplified diagram used as an example for ease of understanding, and the communication system may further include another network device or another terminal device that is not shown in FIG. 1.

It should be further understood that the communication system 100 shown in FIG. 1 is merely an example of an application scenario of embodiments of this application, and this application may be further applicable to communication between any two devices, for example, communication between terminal devices or communication between network devices.

For example, FIG. 2 is a diagram of an application architecture of a communication system. For example, the architecture may include a RAN, a terminal, a CN, an external network, and the like. The external network may be a data network (data network, DN). The RAN refers to a wireless network device provided in this application, or is referred to as a RAN device, an access network device, or the like.

The terminal device in this application may be referred to as an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In addition, the terminal device in embodiments of this application may alternatively be a terminal device in an IoT system. An IoT is an important part of future development of information technologies. A main technical feature of the IoT is connecting a thing to a network by using a communication technology, to implement an intelligent network for interconnection between a person and a machine or between one thing and another.

It should be noted that the terminal device and an access network device may communicate with each other by using a specific air interface technology (for example, an NR technology or an LTE technology). Terminal devices may also communicate with each other by using a specific air interface technology (for example, an NR technology or an LTE technology).

In embodiments of this application, an apparatus configured to implement a function of the terminal device may be a terminal device; or may be an apparatus, for example, a chip system or a chip, that can support the terminal device in implementing the function, and the apparatus may be installed in the terminal device. In this embodiment of this application, the chip system may include a chip, or may include a chip and another discrete component.

The access network (access network, AN) device in this application may provide a function of accessing a communication network for an authorized user in a specific area, and may specifically include a RAN device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX) technology, or a code division multiple access (code division multiple access, CDMA) technology. The AN device may allow interconnection and interworking performed between the terminal device and a 3GPP core network by using the non-3GPP technology.

The AN device can be responsible for functions such as radio resource management, quality of service (quality of service, QoS) management, data compression and encryption on an air interface side. The AN device provides an access service for the terminal device, to complete forwarding a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), or a transmission and reception point (transmission and reception point, TRP); may be a gNB or a transmission point (a TRP or a TP) in a 5G (for example, NR) system, or one antenna panel or a group of antenna panels (including a plurality of antenna panels) of a base station in the 5G system; or may be a network node constituting a gNB or a transmission point, for example, a distributed unit (distributed unit, DU), or a base station in a next generation 6G communication system. A specific technology and a specific device form that are used by the AN device are not limited in embodiments of this application.

FIG. 3 shows a possible protocol stack architecture according to an embodiment of this application. The protocol stack architecture is a protocol stack between a terminal device (user equipment, UE) and an access network device.

A message is sent between the terminal device and the access network device through a wireless air interface (a Uu interface), and the protocol stack between the terminal device and the access network device includes control plane protocols and user plane protocols. Layers between a control plane of the terminal device and a control plane of the access network device may be interconnected to exchange signaling, and layers between a user plane of the terminal device and a user plane of the access network device may be interconnected to exchange data.

The control plane includes an RRC layer, a packet data convergence protocol (packet data convergence protocol, PDCP) PDCP layer, a radio link control (radio link control, RLC) layer, a medium access control (medium access control, MAC) layer, and a physical layer (physical layer, PHY) layer. The user plane includes a service data adaptation protocol (service data adaptation protocol, SDAP) layer, a PDCP layer, an RLC layer, a MAC layer, and a PHY layer.

The radio resource control (radio resource control, RRC) layer is used to manage and control radio resources. The SDAP layer is used to perform mapping between a quality of service (quality of service, QoS) flow (flow) and a data radio bearer (data radio bearer, DRB). The SDAP layer is used to map the QoS flow to the DRB. The DRB includes two layers: the PDCP layer and the RLC layer. The PDCP layer is used to perform functions such as header compression, decompression, encryption/decryption, integrity protection, and integrity verification of user plane data. The PDCP layer is configured by using an RRC message. The MAC layer is used to perform mapping between logical channels and transport channels and combine MAC data from different logical channels into one transport block. Protocol layers shown in FIG. 3 are merely examples for description. These protocol layers may be added or deleted. This is not limited in this embodiment of this application.

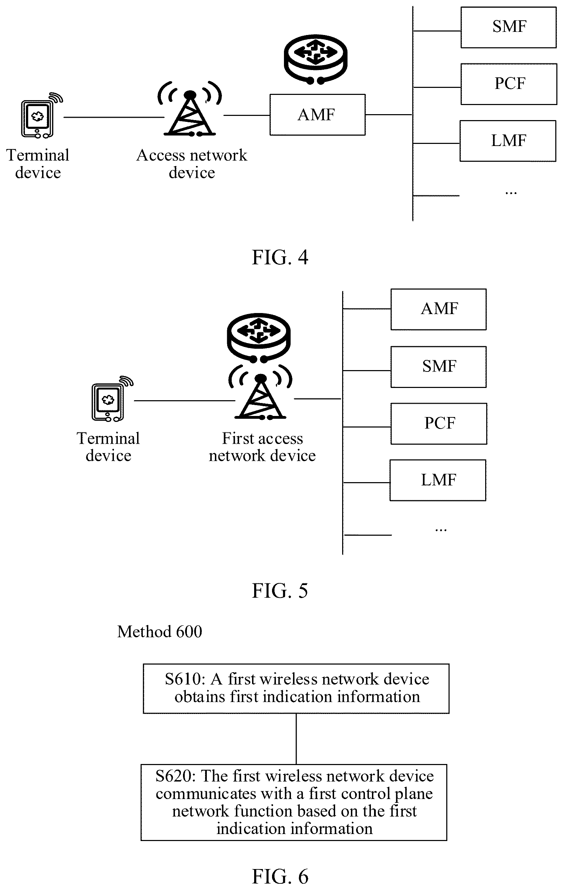

For example, FIG. 4 is a diagram of a possible communication architecture applicable to an embodiment of this application. In an existing RAN architecture, for example, a 5G RAN architecture, an access network device is connected only to an AMF on a control plane, and is not directly connected to another CP NF in a CN. Therefore, the AMF serves as a proxy to shield a CP NF connection and a signaling procedure in the CN for an access network, and processing on the access network is simpler. A signaling interface between the access network and the AMF is configured to perform transmission of two types of messages: (1) an Ng message; and (2) a non-access stratum (non-access stratum, NAS) message. Transmission and termination of the Ng message is performed on an NG interface between the access network and the AMF, and the Ng message needs to be parsed with a corresponding action. The NAS message is direct signaling between a terminal device and a CP NF, and the NAS message is transparently transmitted over the access network. The NAS message between the terminal device and the CP NF may be sent to a plurality of CP NFs, such as an AMF, an SMF, a PCF, an LMF, or the like supported in 5G.

Although an existing solution is simpler for the access network, control plane signaling between the access network and a CP NF other than the AMF needs to be processed or forwarded by the AMF serving as a proxy. Therefore, a transmission delay is caused.

In view of this, embodiments of this application provide a method for communication between a radio access network and a core network and a communication apparatus, so that an access network can directly communicate with a CP NF other than an AMF. Therefore, a delay caused by the AMF serving as a proxy can be reduced.

The following describes a communication architecture without an AMF serving as a proxy according to an embodiment of this application.

FIG. 5 is a diagram of a communication architecture applicable to an embodiment of this application. In the communication architecture, an access network device may directly communicate with a plurality of CP NFs in a CN. In other words, the access network device may alternatively directly communicate with a CP NF other than an AMF, and the AMF does not need to perform processing or forwarding. Therefore, a delay caused by the AMF serving as a proxy can be reduced.

It should be understood that the network architecture shown above is merely an example for description, and a network architecture applicable to embodiments of this application is not limited thereto. Any network architecture that can implement functions of the network elements is applicable to embodiments of this application.

It should be further understood that the functions or network elements shown in the figure may be understood as network elements configured to implement different functions, for example, may be combined into a network slice based on a requirement. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined only for ease of distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

In this application, the access network device directly communicates with each CP NF in the CN. The following describes this solution in detail.

FIG. 6 is a block diagram of a method 600 for communication between a radio access network and a core network according to an embodiment of this application.

In this embodiment, an example in which a terminal device and a network device (a first wireless network device and a core network device) are used as execution bodies of the interaction diagram is used to illustrate the method. However, the execution bodies of the interaction diagram are not limited in this application. For example, the network device in FIG. 6 may alternatively be a chip, a chip system, or a processor that supports a method that can be implemented by the network device, or may be a logic module or software that can implement all or a part of functions of the network device. The terminal device in FIG. 6 may alternatively be a chip, a chip system, or a processor that supports a method that can be implemented by the terminal device, or may be a logic module or software that can implement all or a part of functions of the terminal device.

In this application, a first control plane network function and a second control plane network function are CP NFs in a CN, or may be referred to as control plane entities in the core network.

The second CP NF may be understood as an NF having an anchor function, and the anchor NF has a function of selecting or allocating the first CP NF.

For example, the first control plane network function may include but is not limited to an SMF, an LMF, a PCF, and the like, and the second control plane network function may include but is not limited to an AMF, an NRF, and the like.

In this application, the first control plane network function is a network function determined based on the second control plane network function.

In a possible implementation, the first control plane network function is a network function selected by the second control plane network function. For example, the second control plane network function is the AMF, and the AMF selects the SMF, the PCF, or the LMF, where the SMF, the PCF, or the LMF is the first control plane network function.

In another possible implementation, the first control plane network function is a network function selected by another network function based on the second control plane network function. For example, the second control plane network function is the NRF. The first wireless network device queries the NRF to obtain information such as a capability of a CN NF, and selects the AMF entity, the SMF entity, the PCF entity, or the LMF entity, where the AMF, the SMF, the PCF, or the LMF is the first control plane network function.

It should be understood that, in this application, the first control plane network function and the second control plane network function are network functions allocated to the terminal device during initial registration of the terminal device, or may be initially allocated network functions that are found for the terminal device during non-initial registration of the terminal device. This is not limited in embodiments.

In this application, the first wireless network device is a wireless network device serving the terminal device, for example, an access network device.

It should be understood that names of network functions in the foregoing examples are defined only for ease of distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

The method 600 may include the following steps.

S610: The first wireless network device obtains first indication information. The first indication information indicates the first control plane network function serving the terminal device.

The first wireless network device obtains the first indication information, and the first wireless network device may communicate with the first control plane network function based on the first indication information.

The first indication information is first described.

The first indication information includes a first identifier of the terminal device and at least one of the following information: a type and/or an identifier of the first control plane network function, an address of the first control plane network function, and a session identifier corresponding to the first control plane network function.

The first identifier of the terminal device indicates the terminal device.

The first identifier of the terminal device includes any one of a temporary mobile subscriber identity (temporary mobile subscriber identity, TMSI), an international mobile subscriber identity (international mobile subscriber identity, IMSI), or an NG protocol identity (ng application protocol identity, NGAP ID).

The type of the first control plane network function may be understood as a type of a network entity, for example, the SMF, the PCF, the LMF, or the like.

The address of the first control plane network function may be an IP address, or may be another address. This is not limited in embodiments of this application.

The session identifier corresponding to the first control plane network function may be understood as that different core network function entities of a same type may be allocated to different sessions of the terminal device, and a unique function entity may be determined based on the session identifier. For example, the AMF may allocate different SMFs to different sessions, or may allocate a same SMF to different sessions. In this case, a corresponding SMF identifier may be determined based on the session identifier.

The following describes in detail how the first wireless network device obtains the first indication information.

In a possible implementation, a first network element sends the first indication information to the first wireless network device, and correspondingly, the first wireless network device receives the first indication information from the first network element.

Optionally, before the first network element sends the first indication information to the first wireless network device, the first wireless network device sends a first request message to the first network element, where the first request message is used to request the first indication information from the first network element.

For example, when the terminal device does not report the first indication information, the first wireless network device sends the first request message to the first network element. When the terminal device reports the first indication information to the first wireless network device and the first wireless network device can determine address information or identification information of the first control plane network function based on the first indication information, the first wireless network device may not send the first request message. When the first wireless network device cannot determine address information or identification information of the first control plane network function based on the first indication information, the first wireless network device may send the first request message.

The first network element includes one of the second control plane network function, the first control plane network function, the terminal device, a second wireless network device, or a network management network element.

For example, the network management network element may be a network management system (network management system, NMS), a network element management system (element management system, EMS), or the like.

For example, the second control plane network function selects the first control plane network function for the terminal device, and sends the first indication information of the selected first control plane network function to the first wireless network device.

For example, the AMF selects the SMF function entity, the PCF function entity, or the LMF function entity for the terminal device, and the AMF sends address information (first indication information) of the selected entity to the first wireless network device.

For example, after obtaining an address or an identifier of the first wireless network device, the first control plane network function may send the first indication information to the first wireless network device.

For example, the SMF, the LMF, or the PCF may send a message to the first wireless network device, and include the first indication information.

For example, after determining the first indication information of the first control plane network function, the terminal device may alternatively report the first indication information to the first wireless network device.

The terminal device may receive the first indication information sent by the first control plane network function, the second control plane network function, the second wireless network device, and the network management network element, or the terminal device does not release the first indication information when switching from a connected state to an idle state or an inactive state, that is, the terminal device stores the first indication information locally. This is not limited in embodiments of this application.

For example, the AMF, the SMF, the LMF, or the PCF may send the first indication information to the terminal device by using NAS signaling.

In a possible implementation, the terminal device reports an address or an identifier of the second control plane network function to the first wireless network device, and does not report the first indication information. For example, the terminal device reports the TMSI to the first wireless network device, where the TMSI carries the address or the identifier of the second control plane network function.

For example, when the second wireless network device stores the first indication information, the second wireless network device may send the first indication information to the first wireless network device. The second wireless network device may be understood as a neighboring wireless network device of the first wireless network device.

It should be understood that the terminal device may be handed over from the first wireless network device to the second wireless network device.

For example, the network management network element may alternatively store the first indication information, and send the first indication information to the first wireless network device.

In another possible implementation, the first wireless network device obtains the first indication information that is stored locally.

For example, the first wireless network device does not release the first indication information in an idle state. Therefore, the first wireless network device can store the first indication information.

For example, the first wireless network device determines and stores the first indication information.

For example, the first wireless network device may query the NRF to obtain information such as capabilities of the first control plane network function and the second control plane network function, and select first control plane network function and second control plane network function entities. The first control plane network function and the second control plane network function each may be the AMF, the SMF, the LMF, or the like.

In this case, after determining the first control plane network function, the first wireless network device may send the first indication information to the first control plane network function, or may send the first indication information to the terminal device. The first control plane network function may alternatively send the first indication information to the terminal device.

In this application, after determining the first indication information of the first control plane network function serving the terminal device, the first wireless network device stores a correspondence between the first identifier of the terminal device and the first indication information of the first control plane network function.

In this application, the first wireless network device sends second indication information to the first control plane network function or the terminal device. For specific content of the second indication information, refer to the following.

In a possible implementation, the first control plane network function may determine the second indication information.

The first control plane network function obtains the second indication information, and the first control plane network function may communicate with the first wireless network device based on the second indication information.

The second indication information includes the first identifier of the terminal device and address information or identification information of the first wireless network device.

An address of the first wireless network device may be an IP address, or may be another address. This is not limited in embodiments of this application.

The following describes in detail how the first control plane network function obtains the second indication information.

In a possible implementation, a second network element sends the second indication information to the first control plane network function, and correspondingly, the first control plane network function receives the second indication information sent by the second network element.

The second network element includes one of the second control plane network function, the first wireless network device, the terminal device, the second wireless network device, or the network management network element.

For example, the second control plane network function sends the second indication information to the first control plane network function.

For example, the AMF sends the address information or the identification information of the first wireless network device to the selected SMF function entity, PCF function entity, or LMF function entity.

For example, after obtaining the address or the identifier of the first control plane network function, the first wireless network device may send the second indication information to the first control plane network function.

For example, after determining the second indication information, the terminal device may alternatively report the second indication information to the first control plane network function.

The terminal device may receive the second indication information sent by the second control plane network function, the first wireless network device, the second wireless network device, or the network management network element, or the terminal device does not release the second indication information when switching from the connected state to the idle state or the inactive state, that is, the terminal device stores the second indication information locally. This is not limited in embodiments of this application.

For example, when the second wireless network device stores the second indication information, the second wireless network device may send the second indication information to the first control plane network function. The second wireless network device may be understood as the neighboring wireless network device of the first wireless network device.

Alternatively, for example, when the network management network element may store the second indication information, the network management network element may send the second indication information to the first control plane network function.

In this application, after determining the second indication information, the first control plane network function may further store the second indication information.

In this application, the first control plane network function may further send the first indication information to the terminal device or the first wireless network device.

S620: The first wireless network device communicates with the first control plane network function based on the first indication information.

For an uplink direction, in a possible implementation, the first wireless network device receives first information sent by the terminal device, where the first information includes the first identifier of the terminal device. The first wireless network device determines the first indication information based on the first identifier. The first wireless network device sends the first information to the first control plane network function based on the first indication information.

For example, when the first wireless network device determines, based on the first identifier, the address of the first control plane network function serving the terminal device, the first wireless network device sends the first information to the first control plane network function based on the address.

For example, when the first wireless network device determines, based on the first identifier, the type of the first control plane network function serving the terminal device and the identifier of the first control plane network function, the first wireless network device may determine the address of the first control plane network function based on the identifier of the first control plane network function corresponding to the type, and send the first information to the first control plane network function based on the address.

For example, when the first wireless network device determines, based on the first identifier, the type of the first control plane network function serving the terminal device, the first wireless network device may send the first information to the first control plane network function of the type.

For example, when the first wireless network device determines, based on the first identifier, the session identifier corresponding to the first control plane network function serving the terminal device, the first wireless network device may determine the identifier of the first control plane network function corresponding to this session, determine the address of the first control plane network function based on the identifier of the first control plane network function, and send the first information to the address.

In a possible implementation, the first control plane network function communicates with the first wireless network device based on the second indication information.

In a possible implementation, the first control plane network function determines the second indication information based on the first identifier of the terminal device, and the first control plane network function sends second information to the first wireless network device based on the second indication information.

For example, when the first control plane network function determines, based on the first identifier, the address of the first wireless network device serving the terminal device, the first control plane network function sends the second information to the first wireless network device based on the address.

For example, when the first control plane network function determines, based on the first identifier, the identifier of the first wireless network device serving the terminal device, and determines the address of the first wireless network device based on the identifier, the first control plane network function sends the second information to the first wireless network device based on the address.

It should be noted that, in a process of communication between the first wireless network device and the first control plane network function, the first wireless network device and the first control plane network function may include different identifiers of the terminal device. For example, the first wireless network device includes the TMSI, and the first control plane network function includes the IMSI. Therefore, a 1^{st} message between the first wireless network device and the first control plane network function needs to be used for association with the terminal device, and a subsequent message may be used for communication based on an association relationship.

This embodiment of this application provides the following manner examples.

In the following manners, an identifier that is of the terminal device and that is included by the first wireless network device is a third identifier, and the third identifier is an identifier that is of the terminal device and that is identifiable by the first wireless network device, for example, the TMSI. An identifier that is of the terminal device and that is included by the first control plane network function is a fifth identifier, and the fifth identifier is an identifier that is of the terminal device and that is identifiable by the first control plane network function, for example, the IMSI.

It may be understood that the third identifier is the identifier that is of the terminal device and that is identifiable by the first wireless network device, and the fifth identifier is the identifier that is of the terminal device and that is identifiable by the first control plane network function.

Manner 1: The first control plane network function sends a second identifier of the terminal device to the first wireless network device, where the second identifier is a communication identifier that is allocated by the first control plane network function to the terminal device and that is in a service range of the first control plane network function. Correspondingly, the first wireless network device receives the second identifier sent by the first control plane network function.

The first wireless network device associates the third identifier of the terminal device with the second identifier of the terminal device, to determine a mapping relationship between the third identifier and the second identifier.

After the first wireless network device determines the mapping relationship between the third identifier and the second identifier, the first wireless network device may determine a context of the terminal device based on the mapping relationship and the second identifier. Alternatively, the second identifier may be carried in a subsequent uplink message, where the second identifier is used by the first control plane network function to query for a context of the terminal device.

For example, the first wireless network device sends the second identifier to the first control plane network function. Correspondingly, the first control plane network function receives the second identifier sent by the first wireless network device, and determines, based on the second identifier, the context corresponding to the terminal device.

For example, the first network function sends the second identifier to the first wireless network device. Correspondingly, the first wireless network device receives the second identifier, determines, based on the mapping relationship, the third identifier corresponding to the second identifier, and determines, based on the third identifier, the context corresponding to the terminal device.

The second identifier may be a CN NGAP ID, and the identifier is a temporary identifier that is allocated by a core network element to the terminal device and that is used for a terrestrial interface (terrestrial interface).

Manner 2: The first wireless network device sends a fourth identifier of the terminal device to the first control plane network function, where the fourth identifier is a communication identifier that is allocated by the first wireless network device to the terminal device and that is in a service range of the first wireless network device. Correspondingly, the first control plane network function receives the fourth identifier sent by the first wireless network device.

The first control plane network function associates the fourth identifier of the terminal device with the fifth identifier of the terminal device, to determine a mapping relationship between the fifth identifier and the fourth identifier.

After the first control plane network function determines the mapping relationship between the fifth identifier and the fourth identifier, the first control plane network function may determine a context of the terminal device based on the mapping relationship. Alternatively, the fourth identifier may be carried in a subsequent downlink message, where the fourth identifier is used by the first wireless network device to query for a context of the terminal device.

For example, the first control plane network function sends the fourth identifier to the first wireless network device. Correspondingly, the first wireless network device receives the fourth identifier sent by the first control plane network function, and determines, based on the fourth identifier, the context corresponding to the terminal device.

The fourth identifier may be a RAN NGAP ID, and the identifier is a temporary identifier that is allocated by an access network element to the terminal device and that is used for a terrestrial interface.

Manner 3: The first wireless network device or the first control plane network function determines a first mapping relationship, where the first mapping relationship includes a correspondence between the third identifier and the fifth identifier.

In a possible implementation, the second control plane network function sends the first mapping relationship to the first wireless network device or the first control plane network function. Correspondingly, the first wireless network device or the first control plane network function receives the first mapping relationship sent by the second control plane network function.

In a possible implementation, the first mapping relationship is preconfigured by a network device or predefined in a protocol. A manner of obtaining the first mapping relationship is not limited in embodiments of this application.

The following describes sending of a downlink message.

In a downlink direction, the first control plane network function sends the fifth identifier and the second identifier to the first wireless network device. Correspondingly, the first wireless network device receives the fifth identifier and the second identifier, and determines a second mapping relationship between the second identifier and the third identifier based on the fifth identifier, the second identifier, and the first mapping relationship.

The first wireless network device may determine the context of the terminal device based on the second mapping relationship; or the first wireless network device may determine the context of the terminal device based on the fourth identifier.

For example, the first control plane network function sends the second identifier to the first wireless network device. Correspondingly, the first wireless network device receives the second identifier, determines the third identifier based on the second mapping relationship, and queries for the context of the terminal device based on the third identifier.

For example, the first control plane network function sends the fourth identifier to the first wireless network device. Correspondingly, the first wireless network device receives the fourth identifier, determines the corresponding third identifier based on the fourth identifier, and queries for the context of the terminal device based on the third identifier.

The following describes sending of an uplink message.

The first wireless network device sends the third identifier and the fourth identifier to the first control plane network function. Correspondingly, the first control plane network function receives the third identifier and the fourth identifier, and determines a third mapping relationship between the fourth identifier and the fifth identifier based on the third identifier, the fourth identifier, and the first mapping relationship.

The first control plane network function may determine the context of the terminal device based on the third mapping relationship; or the first control plane network function may determine the context of the terminal device based on the second identifier.

A subsequent uplink message may carry the fourth identifier, or may carry the second identifier.

For example, the first wireless network device sends the fourth identifier to the first control plane network function. Correspondingly, the first control plane network function receives the fourth identifier, determines the fifth identifier based on the third mapping relationship, and queries for the context of the terminal device based on the fifth identifier.

For example, the first wireless network device sends the second identifier to the first control plane network function. Correspondingly, the first control plane network function receives the second identifier, determines the fifth identifier based on the second identifier, and queries for the context of the terminal device based on the fifth identifier.

In this application, the first wireless network device sends an uplink message to the first control plane network function or the second control plane network function, and the first wireless network device may determine a specific entity to which the uplink message is specifically routed. When the first control plane network function or the second control plane network function sends a downlink message to the terminal device, the first wireless network device may determine a specific terminal to which the downlink message is specifically routed.

In a possible implementation, the terminal device sends a first message to the first wireless network device, where the first message may be an access stratum message, and the first message includes assistance information. The first wireless network device receives the first message, and communicates with the first control plane network function and/or the second control plane network function based on the assistance information.

For example, the first message may be a radio resource control RRC message, and the message includes the assistance information. The first wireless network device communicates with the first control plane network function and/or the second control plane network function based on the assistance information.

The assistance information includes at least one of the following: a type of the message, the type of the first control plane network function and/or a type of the second control plane network function, the identifier or the address of the first control plane network function and/or an identifier or an address of the second control plane network function, and the session identifier corresponding to the first control plane network function.

It should be understood that a message type of an uplink message sent by the terminal device may be a NAS message, or may be an RRC message. When the type of the message is the RRC message, the first wireless network device may generate an Ng message based on the RRC message.

In a possible implementation, the first control plane network function or the second control plane network function sends a second message to the first wireless network device, the second message includes the first identifier of the terminal device, and the first wireless network device sends the second message to the terminal device based on the first identifier of the terminal device.

The first wireless network device may query for the context of the terminal device based on the first identifier of the terminal device, obtain a signaling radio bearer (signaling radio bearer, SRB) of the terminal device, and perform forwarding to the corresponding terminal device over the SRB.

It should be understood that the first wireless network device may combine a plurality of messages and send a combined message to a same terminal device.

In the foregoing solution, a solution in which the first wireless network device and the first control plane network function obtain indication information of both communication parties and perform direct communication based on the indication information is described. The following describes specific solutions in different scenarios in detail.

First, an example solution of implementing communication between a first wireless network device and a first control plane network function during initial registration of a terminal device is described.

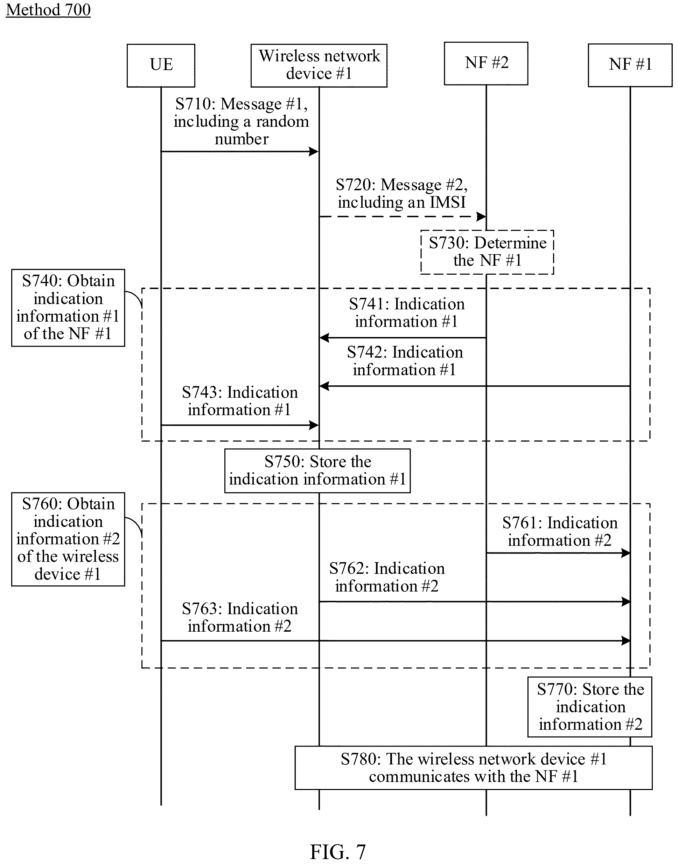

FIG. 7 is a diagram of a method 700 for communication between a radio access network and a core network according to an embodiment of this application.

In this embodiment, an example in which the first wireless network device is a wireless network device #1, the first control plane network function is an NF #1, and a second control plane network function is an NF #2 is used.

The method 700 may include the following steps.

S710: The terminal device sends a message #1 to the wireless network device #1.

During initial access, the terminal device sends the message #1 to the wireless network device #1, where the message #1 is used to initiate RRC connection establishment.

The message #1 includes a random number.

For example, the message #1 may be an RRC connection establishment request message.

Optionally, the message #1 includes indication information #1.

The indication information #1 includes an identifier of the terminal device and at least one of the following information: a type and/or an identifier of the NF #1, an address of the NF #1, and an identifier of a session corresponding to the NF #1.

It may be understood that when the terminal device enters an inactive state or an idle state from a connected state, the terminal device stores information about the NF #1 allocated to the terminal device in the connected state, and then sends the indication information #1 to the wireless network device #1 by using the message #1.

S720: The wireless network device #1 sends a message #2 to the NF #2.

After the RRC connection establishment is completed, the wireless network device #1 sends the message #2 to the NF #2.

The message #2 includes an identifier IMSI of the terminal device.

For example, the message #2 may be an initial message of the terminal device (initial UE message).

S730: The NF #2 determines the NF #1.

The NF #2 selects the NF #1.

For example, the NF #2 may select an SMF entity, a PCF entity, or an LMF entity from an SMF pool, a PCF pool, or an LMF pool.

The NF #2 may store the information about the NF #1 allocated to the terminal device.

This step is an optional step. For example, in S710, when the message #1 sent by the terminal device carries the indication information #1, S730 may not be performed.

S740: The wireless network device #1 obtains the indication information #1 of the NF #1.

The indication information #1 includes the identifier of the terminal device and at least one of the following: the type and/or the identifier of the NF #1, the address of the NF #1, and the identifier of the session corresponding to the NF #1.

Optionally, before determining the indication information #1 of the NF #1, the wireless network device #1 may send a request message to the NF #2, the NF #1, or the terminal device, where the request message is used to request the indication information #1.

Optionally, the NF #2, the NF #1, or the terminal device may alternatively actively send the indication information #1.

The wireless network device #1 may obtain the indication information #1 of the NF #1 in three manners: S741, S742, or S743.

S741: The NF #2 sends the indication information #1 to the wireless network device #1.

After determining the indication information #1 of the NF #1, the NF #2 sends the indication information #1 to the wireless network device #1.

S742: The NF #1 sends the indication information #1 to the wireless network device #1.

After obtaining an address or an identifier of the wireless network device #1, the NF #1 may send a downlink message to the wireless network device #1, and include the indication information #1.

S743: The terminal device sends the indication information #1 to the wireless network device #1.

After obtaining the indication information #1 of the NF #1, the terminal device sends the indication information #1 to the wireless network device #1.

The terminal device may obtain the indication information #1 by using the downlink message of the NF #1, or may obtain the indication information #1 by using a downlink message of the NF #2.

The terminal device may store the indication information #1.

It should be understood that, in addition to the foregoing manners, the wireless network device #1 may alternatively obtain the indication information #1 from any network element that stores the indication information #1.

For example, the wireless network device #1 obtains the indication information #1 that is stored locally.

For another example, the wireless network device #1 obtains the indication information #1 stored in a neighboring wireless network device #2.

For another example, the wireless network device #1 obtains the indication information #1 from a network management network element that stores the indication information #1.

This is not limited in this embodiment of this application.

S750: The wireless network device #1 stores the indication information #1.

The wireless network device #1 may store a correspondence between the identifier of the terminal device and the indication information #1.

It should be understood that the wireless network device #1 may alternatively release the indication information #1.

For example, the wireless network device #1 may release the stored indication information #1 based on a timer.

For example, the wireless network device #1 may alternatively release the stored indication information #1 based on a notification message of another network element.

It should be noted that before communicating with the NF #1, the wireless network device #1 may determine whether the indication information #1 corresponding to the NF #1 is stored, or whether the indication information #1 actively reported by the terminal device is received. If the indication information #1 is stored or is reported by the terminal device, step S740 does not need to be performed. If the indication information #1 is not stored or is not reported by the terminal device, the wireless network device #1 may send a request message to another network element, for example, the NF #2, the NF #1, or the terminal device.

S760: The NF #1 obtains indication information #2 of the wireless network device #1.

The indication information #2 includes at least one of the following: the identifier of the terminal device and the identifier or the address of the wireless network device #1.

Optionally, before determining the indication information #2 of the wireless network device #1, the NF #1 may send a request message to the NF #2, the wireless network device #1, or the terminal device, where the request message is used to request the indication information #2.

Optionally, the NF #2, the wireless network device NF #1, or the terminal device may alternatively actively send the indication information #2.

The NF #1 may obtain the indication information #2 of the wireless network device #1 in three manners: S761, S762, or S763.

S761: The NF #2 sends the indication information #2 to the NF #1.

The NF #2 determines the NF #1, and the NF #2 may send the indication information #2 to the NF #1.

S762: The wireless network device #1 sends the indication information #2 to the NF #1.

After obtaining the address or the identifier of the NF #1, the wireless network device #1 may initiate uplink communication to the NF #1, and include the indication information #2.

S763: The terminal device sends the indication information #2 to the NF #1.

In a possible implementation, after obtaining the indication information #2 of the wireless network device, the terminal device sends the indication information #2 to the NF #1.

For example, the terminal device may report the indication information #2 to the NF #1 by using a NAS message.

In a possible implementation, the terminal device may first send the indication information #2 to the NF #2, and the NF #2 forwards the indication information #2 to the NF #1.

The terminal device may obtain the indication information #2 by using RRC signaling of the wireless network device #1, or may obtain the indication information #2 by using a downlink message of the NF #1.

The terminal device may store the indication information #2.

It should be understood that, in addition to the foregoing manners, the NF #1 may alternatively obtain the indication information #2 from any network element that stores the indication information #2.

For example, the NF #1 obtains the indication information #2 stored in the neighboring wireless network device #2 of the wireless network device #1.

For another example, the NF #1 obtains the indication information #2 from a network management network element that stores the indication information #2.

This is not limited in this embodiment of this application.

S770: The NF #1 stores the indication information #2.

The NF #1 stores a correspondence between the identifier of the terminal device and the indication information #2.

It should be understood that the NF #1 may alternatively release the indication information #2.

For example, the NF #1 may release the stored indication information #2 based on a timer.

For example, the NF #1 may alternatively release the stored indication information #2 based on a notification message of another network element.

It should be noted that when communicating with the wireless network device #1, the NF #1 may determine whether the indication information #2 corresponding to the wireless network device #1 is stored, or whether the indication information #2 actively reported by the terminal device is received. If the indication information #2 is stored or is reported by the terminal device, step S760 does not need to be performed. If the indication information #2 is not stored or is not reported by the terminal device, the NF #1 may send a request message to another network element, for example, the NF #2, the wireless network device #1, or the terminal device.

In this application, an execution sequence of steps S740 to S750 and S760 to S770 is not limited. For example, S741 and S761 may be simultaneously performed, or may be sequentially performed. This is not limited in this embodiment of this application.

S780: The wireless network device #1 communicates with the NF #1.

The wireless network device #1 performs the uplink communication with the NF #1 based on the indication information #1, and the NF #1 performs the downlink communication with the wireless network device #1 based on the indication information #2.

It should be understood that, in the solution shown in FIG. 7, as shown in step S730 in FIG. 7, the NF #2 may determine the NF #1. In this application, the NF #1 and the NF #2 may alternatively be determined by the wireless network device #1.

The following describes a solution in which the wireless network device #1 determines the NF #1 and the NF #2.

The wireless network device #1 may obtain information such as a capability of each CN NF by querying an NRF, and select a function entity like the NF #2, the SMF, or the PCF.

In this solution, the wireless network device #1 may determine the indication information #1 of the NF #1, and send the indication information #1 to the NF #1, or may send the indication information #1 to the terminal device. Alternatively, the NF #1 may send the indication information #1 to the terminal device.

In this solution, for a manner in which the NF #1 obtains the indication information #2 of the wireless network device #1, refer to the solution in FIG. 7. Details are not described again.

In this technical solution, during the initial registration of the terminal device, the NF #2 allocates a core network entity to the terminal device, and the wireless network device and a core network entity other than the NF #2 may obtain a communication identifier or a communication address of each other, to perform subsequent communication.

Next, an example solution of implementing communication between a first wireless network device and a first control plane network function during non-initial registration of a terminal device is described.

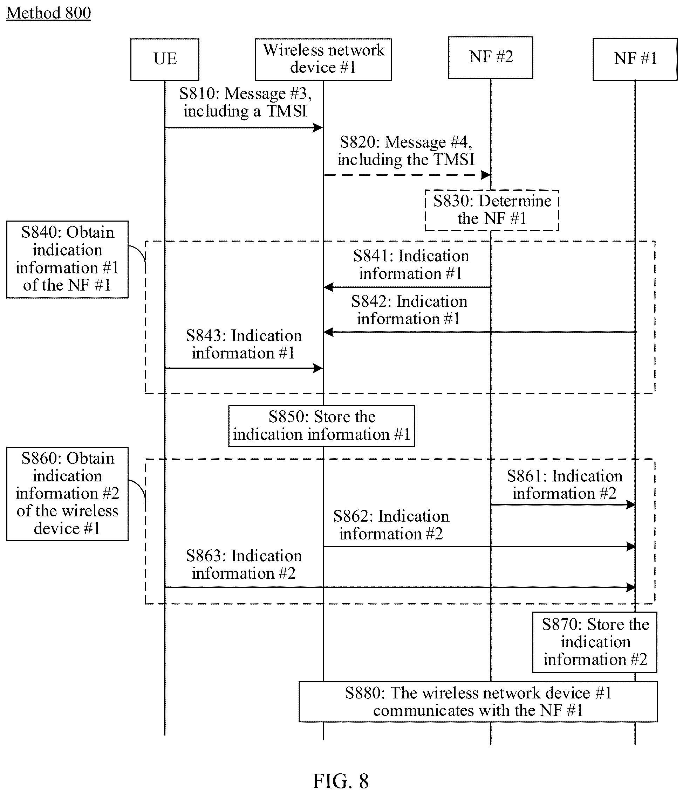

FIG. 8 is a diagram of a method 800 for communication between a radio access network and a core network according to an embodiment of this application.

In this embodiment, an example in which the first wireless network device is a wireless network device #1, the first control plane network function is an NF #1, and a second control plane network function is an NF #2 is used.

The method 800 may include the following steps.

S810: The terminal device sends a message #3 to the wireless network device #1.

During non-initial access, the terminal device sends the message #3 to the wireless network device #1, where the message #3 is used to initiate RRC connection establishment.

The message #3 includes a temporary identifier, for example, a TMSI, allocated by a network to the terminal device during previous initial access.

For example, the message #3 may be an RRC connection establishment request message.

The wireless network device #1 receives the message #3, and obtains the previously allocated NF #2 entity based on the TMSI.

Optionally, the message #3 may further include indication information #1.

The indication information #1 includes an identifier of the terminal device and at least one of the following: a type and/or an identifier of the NF #1, an address of the NF #1, and an identifier of a session corresponding to the NF #1.

It may be understood that the terminal device may store information about the previously allocated NF #1, and then send the indication information #1 to the wireless network device #1 by using the message #3.

S820: The wireless network device #1 sends a message #4 to the NF #2.

After the RRC connection establishment is completed, the wireless network device #1 sends the message #4 to the NF #2.

The message #4 includes the temporary identifier, for example, the TMSI.

For example, the message #4 may be an initial message of the terminal device.

This step is an optional step.

S830: The NF #2 determines the NF #1.

The NF #2 queries, based on the TMSI carried in the message #4, for the information about the NF #1 previously allocated to the terminal device.

It should be understood that, different from step S730, in S730, the NF #2 needs to allocate the NF #1 to the terminal device, but in S830, the NF #2 may query, based on the TMSI, for the information about the NF #1 previously allocated to the terminal device.

The NF #2 may store the information about the NF #1 allocated to the terminal device.

This step is an optional step. For example, in S810, when the message #3 sent by the terminal device carries the indication information #1, S830 may not be performed.

S840: The wireless network device #1 obtains the indication information #1 of the NF #1.

The indication information #1 includes the identifier of the terminal device and at least one of the following: the type and/or the identifier of the NF #1, the address of the NF #1, and the identifier of the session corresponding to the NF #1.

Optionally, before obtaining the indication information #1 of the NF #1, the wireless network device #1 may send a request message to the NF #2, the NF #1, or the terminal device, where the request message is used to request the indication information #1.

Optionally, the NF #2, the NF #1, or the terminal device may alternatively actively send the indication information #1.

For a manner in which the wireless network device #1 obtains the indication information #1 of the NF #1, refer to the manner in FIG. 7. Details are not described again.

It should be noted that in S843, the terminal device may send the indication information #1 to the wireless network device #1.

The terminal device may store the information about the previously allocated NF #1, and then send the indication information #1 to the wireless network device #1.

The terminal device may alternatively obtain the indication information #1 by using a downlink message of the NF #1, or obtain the indication information #1 by using a downlink message of the NF #2.

It should be understood that, in S810, when the message #3 includes the indication information #1, the wireless network device #1 may determine the indication information #1 based on the message #3. In this case, step S840 is an optional step.

S850: The wireless network device #1 stores the indication information #1.

The wireless network device #1 stores a correspondence between the identifier of the terminal device and the indication information #1.

It should be understood that the wireless network device #1 may alternatively release the indication information #1.

For example, the wireless network device #1 may release the stored indication information #1 based on a timer.

For example, the wireless network device #1 may alternatively release the stored indication information #1 based on a notification message of another network element.

It should be noted that when communicating with the NF #1, the wireless network device #1 may determine whether the indication information #1 corresponding to the NF #1 is stored, or whether the indication information #1 actively reported by the terminal device is received. If the indication information #1 is stored or is reported by the terminal device, step S840 does not need to be performed. If the indication information #1 is not stored or is not reported by the terminal device, the wireless network device #1 may send a request message to another network element, for example, the NF #2, the NF #1, or the terminal device.

S860: The NF #1 obtains indication information #2 of the wireless network device #1.

The indication information #2 includes at least one of the following: the identifier of the terminal device and identification information or address information of the wireless network device #1.

Optionally, before obtaining the indication information #2 of the wireless network device #1, the NF #1 may send a request message to the NF #2, the wireless network device #1, or the terminal device, where the request message is used to request the indication information #2.

Optionally, the NF #2, the wireless network device #1, or the terminal device may alternatively actively send the indication information #2.

For a manner in which the NF #1 obtains the indication information #2 of the wireless network device #1, refer to the manner in FIG. 7. Details are not described again.

S870: The NF #1 stores the indication information #2.

The NF #1 stores a correspondence between the identifier of the terminal device and the indication information #2.

In this application, an execution sequence of steps S840 to S850 and S860 to S870 is not limited.

It should be understood that the NF #1 may alternatively release the indication information #2.

For example, the NF #1 may release the stored indication information #2 based on a timer.

For example, the NF #1 may alternatively release the stored indication information #2 based on a notification message of another network element.

It should be noted that when communicating with the wireless network device #1, the NF #1 may determine whether the indication information #2 corresponding to the wireless network device #1 is stored, or whether the indication information #2 actively reported by the terminal device is received. If the indication information #2 is stored or is reported by the terminal device, step S860 does not need to be performed. If the indication information #2 is not stored or is not reported by the terminal device, the NF #1 may send a request message to another network element, for example, the NF #2, the wireless network device #1, or the terminal device.

S880: The wireless network device #1 communicates with the NF #1.

The wireless network device #1 performs uplink communication with the NF #1 based on the indication information #1, and the NF #1 performs downlink communication with the wireless network device #1 based on the indication information #2.

In this technical solution, during the non-initial registration of the terminal device, the NF #2 queries for a previously allocated core network entity for the terminal device, and the wireless network device and a core network entity other than the NF #2 may obtain a communication identifier or a communication address of each other, to perform subsequent communication.

In a process of communication between the first wireless network device and the first control plane network function, the first wireless network device and the first control plane network function include different identifiers of the terminal device. For example, the first wireless network device includes the TMSI, and the first control plane network function includes an IMSI. Therefore, a 1^{st} message between the first wireless network device and the first control plane network function needs to be used for association with the terminal device, and a subsequent message may be used for communication based on an association relationship.

Next, an example solution of associating an identifier that is of a terminal device and that is included in a first wireless network device with an identifier that is of the terminal device and that is included in a first control plane network function is described.

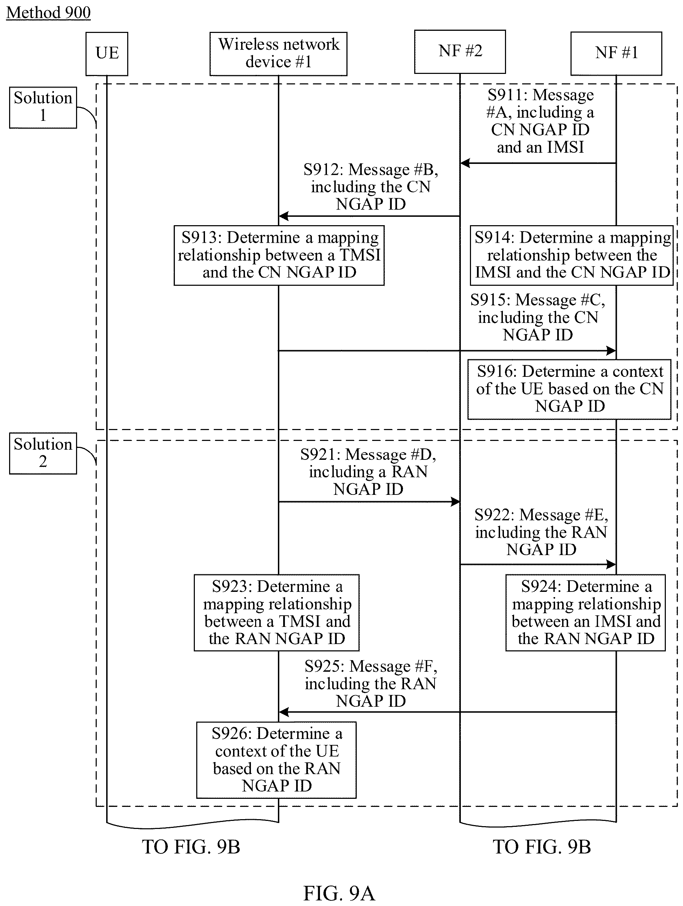

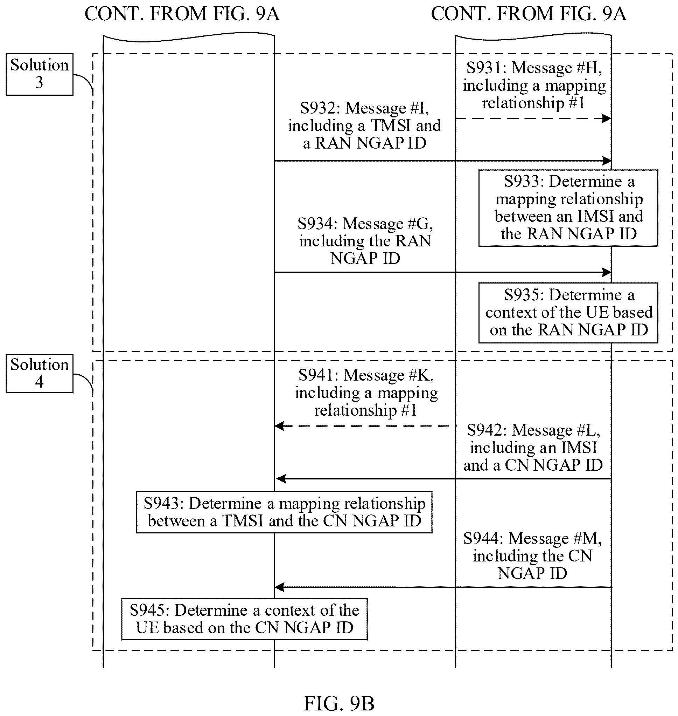

FIG. 9A and FIG. 9B are a diagram of a method 900 for communication between a radio access network and a core network according to an embodiment of this application.

In this embodiment, an example in which the first wireless network device is a wireless network device #1, the first control plane network function is an NF #1, and a second control plane network function is an NF #2 is used.

After the wireless network device #1 completes RRC connection establishment with the terminal device, an initial message that is of the terminal device and that is sent by the wireless network device #1 to the NF #2 may carry a TMSI.

In this application, an example in which a temporary identifier that is allocated by the NF #1 to the terminal device and that is used for a terrestrial interface is a CN NGAP ID is used, and an example in which a temporary identifier that is allocated by the wireless network device #1 to the terminal device and that is used for a terrestrial interface is a RAN NGAP ID is used.

In a possible implementation, the NF #1 may send the CN NGAP ID to the wireless network device #1 via the NF #2, the wireless network device #1 may include the CN NGAP ID in an uplink message, and the NF #1 determines a context of the terminal device based on the CN NGAP ID. For a specific solution, refer to the following descriptions of a solution 1.

The solution 1 may include the following steps S911 to S916.

S911: The NF #1 sends a message #A to the NF #2.

Correspondingly, the NF #2 receives the message #A sent by the NF #1, where the message #A includes the CN NGAP ID and an IMSI.

For example, the message #A may be a downlink NAS transmission message.

It should be noted that before the NF #1 sends the message #A to the NF #2, the NF #2 sends the IMSI to the NF #1.

S912: The NF #2 sends a message #B to the wireless network device #1.

Correspondingly, the wireless network device #1 receives the message #B sent by the NF #2, where the message #B includes the CN NGAP ID.

Optionally, the message #B may further include at least one of the TMSI, the IMSI, and an NF #2 NGAP ID.

It should be understood that the NF #2 may convert the IMSI in the message #A into the TMSI.

S913: The wireless network device #1 determines a mapping relationship between the TMSI and the CN NGAP ID.

The wireless network device #1 may construct the mapping relationship between the TMSI and the CN NGAP ID based on the message #B.

S914: The NF #1 determines a mapping relationship between the IMSI and the CN NGAP ID.

An execution sequence of S913 and S914 is not limited. For example, S913 may be performed before S914, or S914 may be performed before S913. This is not limited in this embodiment of this application.

S915: The wireless network device #1 sends a message #C to the NF #1.

Correspondingly, the NF #1 receives the message #C sent by the wireless network device #1, where the message #C includes the CN NGAP ID.

S916: The NF #1 determines the context of the terminal device based on the CN NGAP ID.

The NF #1 determines the context of the terminal device based on the CN NGAP ID in the message #C.

In another possible implementation, the wireless network device #1 may send the RAN NGAP ID to the NF #1 via the NF #2, the wireless network device #1 may include the RAN NGAP ID in a downlink message, and the wireless network device #1 determines a context of the terminal device based on the RAN NGAP ID. For a specific solution, refer to the following descriptions of a solution 2.

The solution 2 may include the following steps S921 to S926.

S921: The wireless network device #1 sends a message #D to the NF #2.

Correspondingly, the NF #2 receives the message #D sent by the wireless network device #1, where the message #D includes the RAN NGAP ID.

Optionally, the message #D may further include the TMSI.

S922: The NF #2 sends a message #E to the NF #1.

Correspondingly, the NF #1 receives the message #E sent by the NF #2, where the message #E includes the RAN NGAP ID.

Optionally, the message #E may further include at least one of an IMSI, the TMSI, and an NF #2 NGAP ID.

For example, the message #E may be a PDU session establishment request message during communication between the NF #2 and an SMF.

S923: The wireless network device #1 determines a mapping relationship between the TMSI and the RAN NGAP ID.

S924: The NF #1 determines a mapping relationship between the IMSI and the CN NGAP ID.

The NF #1 may construct the mapping relationship between the IMSI and the RAN NGAP ID based on the message #E.

An execution sequence of S923 and S924 is not limited. For example, S923 may be performed before S924, or S924 may be performed before S923. This is not limited in this embodiment of this application.

S925: The NF #1 sends a message #F to the wireless network device #1.

Correspondingly, the wireless network device #1 receives the message #F sent by the NF #1, where the message #F includes the RAN NGAP ID.

S926: The wireless network device #1 determines the context of the terminal device based on the RAN NGAP ID.

The wireless network device #1 determines the context of the terminal device based on the RAN NGAP ID in the message #F.

In still another possible implementation, the NF #2 may send a mapping relationship between the TMSI and an IMSI to the NF #1. The NF #1 may determine a mapping relationship between the IMSI and the RAN NGAP ID based on the mapping relationship, and further determine a context of the terminal device based on the RAN NGAP ID carried in an uplink message. For a specific solution, refer to the following descriptions of a solution 3.

The solution 3 may include the following steps S931 to S935.

S931: The NF #2 sends a message #H to the NF #1.

Correspondingly, the NF #1 receives the message #H sent by the NF #2, where the message #H includes a mapping relationship #1, and the mapping relationship #1 is the mapping relationship between the TMSI and the IMSI.

It should be understood that S931 is an optional step, and the mapping relationship #1 may alternatively be a preconfigured mapping relationship or a mapping relationship predefined in a protocol. This is not limited in this embodiment of this application.

S932: The wireless network device #1 sends a message #I to the NF #1.

Correspondingly, the NF #1 receives the message #I sent by the wireless network device #1, where the message #I includes the TMSI and the RAN NGAP ID.

The message #I is a 1^{st} uplink message.

S933: The NF #1 determines the mapping relationship between the IMSI and the RAN NGAP ID.

The NF #1 determines the mapping relationship between the IMSI and the RAN NGAP ID based on the mapping relationship #1 and the message #I.

S934: The wireless network device #1 sends a message #G to the NF #1.

Correspondingly, the NF #1 receives the message #G sent by the wireless network device #1, where the message #G includes the RAN NGAP ID.

Optionally, the message #G may further include the CN NGAP ID.

The message #G is not a 1^{st} uplink message.

S935: The NF #1 determines the context of the terminal device based on the RAN NGAP ID.

The NF #1 determines the context of the terminal device based on the RAN NGAP ID in the message #G and the mapping relationship between the IMSI and the RAN NGAP ID.

It should be understood that if the message #G further includes the CN NGAP ID, the NF #1 determines the context of the terminal device based on the CN NGAP ID.

In yet another possible implementation, the NF #2 may send a mapping relationship between the TMSI and an IMSI to the wireless network device #1. The wireless network device #1 may determine a mapping relationship between the TMSI and the CN NGAP ID based on the mapping relationship, and further determine a context of the terminal device based on the CN NGAP ID carried in a downlink message. For a specific solution, refer to the following descriptions of a solution 4.

The solution 4 may include the following steps S941 to S945.

S941: The NF #2 sends a message #K to the wireless network device #1.

Correspondingly, the wireless network device #1 receives the message #K sent by the NF #2, where the message #K includes a mapping relationship #1, and the mapping relationship #1 is the mapping relationship between the TMSI and the IMSI.

It should be understood that S941 is an optional step, and the mapping relationship #1 may alternatively be a preconfigured mapping relationship or a mapping relationship predefined in a protocol. This is not limited in this embodiment of this application.

S942: The NF #1 sends a message #L to the wireless network device #1.

Correspondingly, the wireless network device #1 receives the message #L sent by the NF #1, where the message #L includes the IMSI and the CN NGAP ID.

The message #L is a 1^{st} downlink message.

S943: The wireless network device #1 determines the mapping relationship between the TMSI and the CN NGAP ID.

The wireless network device #1 determines the mapping relationship between the TMSI and the CN NGAP ID based on the mapping relationship #1 and the message #L.

S944: The NF #1 sends a message #M to the wireless network device #.

Correspondingly, the wireless network device #1 receives the message #M sent by the NF #1, where the message #M includes the CN NGAP ID.

Optionally, the message #M may further include the RAN NGAP ID.

The message #M is not a 1^{st} downlink message.

S945: The wireless network device #1 determines the context of the terminal device based on the CN NGAP ID.

The wireless network device #1 determines the context of the terminal device based on the CN NGAP ID in the message #M and the mapping relationship between the TMSI and the CN NGAP ID.

It should be understood that if the message #M further includes the RAN NGAP ID, the wireless network device #1 determines the context of the terminal device based on the RAN NGAP ID.

It should be understood that any one of the foregoing four solutions may be performed.

According to the foregoing technical solution, a 1^{st} message between the first wireless network device and the first control plane network function may be used for association with the terminal device, and a subsequent message may be used for communication based on associated identifiers.

In this application, the first wireless network device sends an uplink message to the first control plane network function or the second control plane network function, and the first wireless network device may determine a specific entity to which the uplink message is specifically routed. When the first control plane network function or the second control plane network function sends a downlink message to the terminal device, the first wireless network device may determine a specific terminal to which the downlink message is specifically routed.

The following describes a solution for routing a message between a first wireless network device and a first control plane network function.

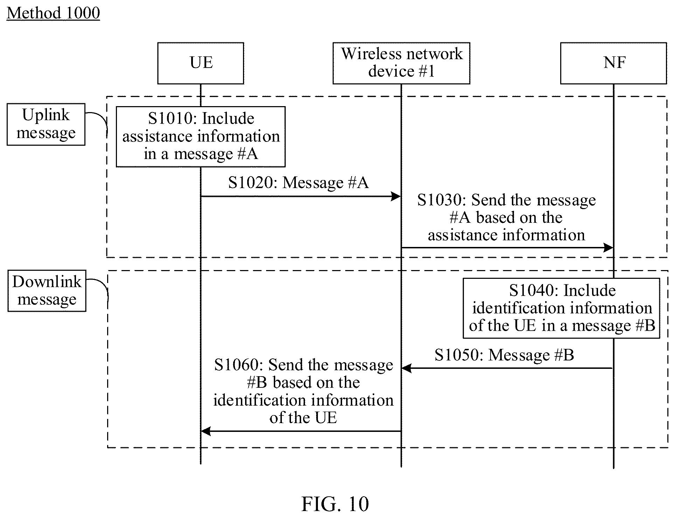

FIG. 10 is a diagram of a method 1000 for communication between a radio access network and a core network according to an embodiment of this application.

In this embodiment, an example in which the first wireless network device is a wireless network device #1 is used. An NF is a core network element, and may include, for example, the first control plane network function and a second control plane network function.

Specifically, steps for routing an uplink message are shown in the following.

S1010: A terminal device includes assistance information in a message #A.

The message #A is an access stratum message.

For example, the message #A may be an RRC message.

The assistance information includes at least one of the following: a type of the message, a type of the NF, an identifier or an address of the NF, and a session identifier corresponding to the NF.

The type of the message may be a NAS message, or may be an RRC message. When the type of the message is the RRC message, the wireless network device #1 may generate an Ng message based on the RRC message.

The NF in this embodiment may be understood as any function entity in the core network. For example, the NF may include an NF #2, or may include an NF #1.

It may be understood that the type of the NF may be a type of the NF #1, to be specific, an SMF, an LMF, a PCF, or the like; or may be a type of the NF #2, to be specific, an AMF.

The identifier or the address of the NF may be an identifier or an address of the NF #1, or may be an identifier or an address of the NF #2.

The session identifier corresponding to the NF may be a session identifier corresponding to the SMF. For example, different sessions may correspond to different SMFs, or different sessions may correspond to a same SMF. This is not limited in this embodiment of this application.

It should be noted that the terminal device may include the assistance information in access stratum signaling. The foregoing RRC layer is merely an example for description. This is not limited in this embodiment of this application.

S1020: The terminal device sends the message #A to the wireless network device #1.

Correspondingly, the wireless network device #1 receives the message #A sent by the terminal device.

S1030: The wireless network device #1 sends the message #A to the NF based on the assistance information in the message #A.

The wireless network device #1 determines, based on the assistance information, a specific NF entity to which the message #A is sent.

For example, when the assistance information includes an address of the LMF, the wireless network device #1 may send the message #A to the LMF.

For another example, when the assistance information includes an identifier of the SMF and an identifier of the AMF, the wireless network device #1 may send the message #A to the SMF and the AMF.

Specifically, steps for routing a downlink message are shown in the following.

S1040: The NF includes identification information of the terminal device in a message #B.

An identifier of the terminal device may include any one of a TMSI, an IMSI, a RAN NAGAP ID, a CN NGAP ID, and the like.

S1050: The NF sends the message #B to the wireless network device #1.

Correspondingly, the wireless network device #1 receives the message #B sent by the NF.

S1060: The wireless network device #1 sends the message #B to the terminal device based on the identification information that is of the terminal device and that is in the message #B.

The wireless network device #1 determines, based on the identification information of the terminal device, a specific terminal device to which the message #B is sent.

The wireless network device #1 determines the identifier of the terminal device based on the identification information that is of the terminal device and that is in the message #B, further queries for a context of the terminal device, obtains an SRB of the terminal device, and forwards the message #B to the corresponding terminal device over the SRB.

In a possible implementation, the wireless network device #1 may combine a plurality of downlink messages sent by the NF.

For example, when identifiers that are of the terminal device and that are carried in the plurality of downlink messages are the same, the plurality of downlink messages may be combined and sent to the terminal device.

In this technical solution, the wireless network device may send the uplink message to the corresponding NF entity based on the assistance information in the uplink message, and the wireless network device may send the downlink message to the corresponding terminal device based on the identification information that is of the terminal device and that is in the downlink message, to implement accurate message routing.

It should be understood that, generally, one SRB may be used for transmission of all NAS messages. When different NAS messages have different quality of service QoS priorities, NAS messages of different priorities need to be transmitted over different SRBs.

The following describes a solution in which transmission of different NAS messages over different SRBs is supported.

First, the wireless network device may configure a plurality of SRBs for the terminal device, and indicate that the SRBs are used for NAS transmission.

In a possible implementation, the wireless network device receives a plurality of NAS messages, and separately maps the plurality of NAS messages to at least two SRBs for transmission, where there is a correspondence between the plurality of NAS messages and the at least two SRBs.

First, a process in which the wireless network device performs downlink SRB mapping is described.

Step a: The wireless network device receives a plurality of downlink NAS messages.

Step b: The wireless network device determines, based on a NAS type and/or a session identifier, NAS quality of service flow identifiers QoS flow IDs corresponding to the plurality of NAS messages.

Step c: The wireless network device establishes one or more SRBs based on a mapping relationship between a NAS QoS flow ID and QoS.

The mapping relationship between the NAS QoS flow ID and the QoS may be preconfigured by a network, or may be predefined in a protocol. This is not limited in this embodiment of this application.

Step d: The wireless network device maps different NAS messages to corresponding SRBs for transmission based on a mapping relationship between the NAS QoS flow ID and an SRB ID.

The following describes a process in which the terminal device performs uplink SRB mapping.

The terminal device may perform the uplink SRB mapping in two manners.

### Manner 1:

Step a: The terminal device determines, based on a fourth mapping relationship, NAS QoS flow IDs corresponding to a plurality of NAS messages.

The fourth mapping relationship is a mapping relationship between a NAS type and/or a session identifier and a NAS QoS flow ID.

The fourth mapping relationship may be preconfigured by the core network or the wireless network device for the terminal device, or may be predefined in a protocol. This is not limited in embodiments of this application.

Step b: The terminal device determines, based on a fifth mapping relationship, SRBs corresponding to the plurality of NAS messages, and maps different NAS messages to corresponding SRBs for transmission.

The fifth mapping relationship is a mapping relationship between the NAS QoS flow ID and an SRB ID.

The fifth mapping relationship may be preconfigured by the core network or the wireless network device for the terminal device, or may be predefined in a protocol. This is not limited in embodiments of this application.

### Manner 2:

Step a: The terminal device determines, based on a sixth mapping relationship, SRBs corresponding to a plurality of NAS messages, and maps different NAS messages to corresponding SRBs for transmission.

The sixth mapping relationship is a mapping relationship between a NAS type and/or a session identifier and an SRB.

The sixth mapping relationship may be preconfigured by the core network or the wireless network device for the terminal device, or may be predefined in a protocol. This is not limited in embodiments of this application.

The NAS type includes at least one of the following: a type of the NAS message, the type of the NF, the identifier or the address of the NF, and the session identifier corresponding to the NF.

The NF in this embodiment may be understood as any function entity in the core network. For example, the NF may include the AMF, or may include the foregoing NF #1.

It should be noted that this solution is applicable to a scenario in which no AMF proxy is used for communication, and is also applicable to a scenario in which an AMF proxy is used for communication.

In this technical solution, the plurality of SRBs may be used for transmission of the NAS messages, and the NAS messages are mapped to different SRBs based on different NAS QoS priorities, to perform differentiated NAS transmission assurance.

In a possible implementation, when a terminal device is in an inactive state, the terminal device may request a wireless network device #1 for restoring a connected state, and the wireless network device #1 may obtain a context of the terminal device via a wireless network device #3. The wireless network device #3 stores the context of the terminal device, including an ID or an address of a previously allocated NF, and the NF includes a first control plane network function and a second control plane network function.

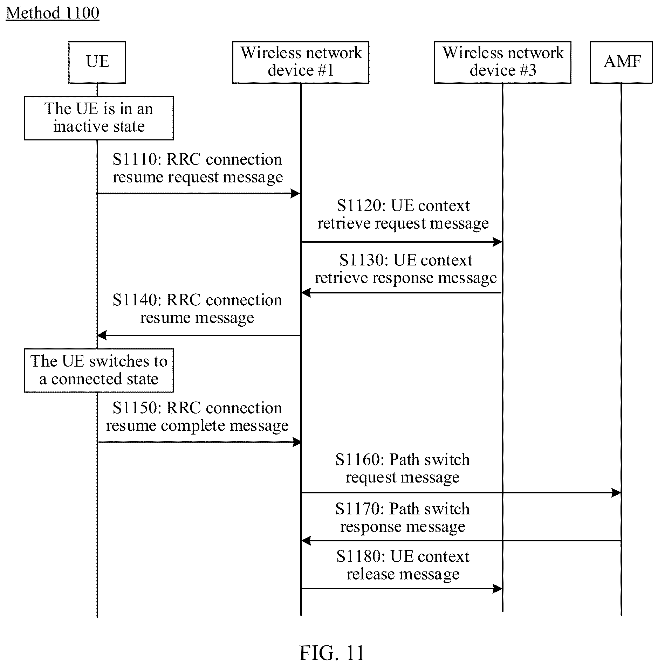

FIG. 11 is a schematic flowchart of accessing when a terminal device switches from an inactive state to a connected state.

Specific steps include the following steps S1110 to S1180.

S1110: The terminal device sends an RRC connection resume request message to the wireless network device #1.

S1120: The wireless network device #1 sends a terminal device context retrieve (retrieve) request message to the wireless network device #3.

The wireless network device #3 stores the context of the terminal device.

The wireless network device #3 may be a neighboring wireless network device of the wireless network device #1.

For example, the wireless network device #3 may be a last serving wireless network device last serving gNB.

The currently accessed wireless network device #1 may request the context of the terminal device from the wireless network device #3.

S1130: The wireless network device #3 sends a terminal device context retrieve response message to the wireless network device #1.

The wireless network device #3 sends, to the wireless network device #1 by using the terminal device context retrieve response message, an ID or an address of an NF serving the terminal device, where the ID or the address is used by the wireless network device #1 to send an uplink message to the NF.

S1140: The wireless network device #1 sends an RRC connection resume message to the terminal device.

The terminal device restores to an RRC connected state.

S1150: The terminal device sends an RRC connection resume complete message to the wireless network device #1.

S1160: The wireless network device #1 sends a path switch request message to an AMF.

For example, the wireless network device #1 may send ID information or address information of the wireless network device #1 to the AMF by using the path switch request message. The AMF further sends the ID information or the address information of the wireless network device #1 to another NF (the first control plane network function), where the ID information or the address information is used by the first control plane network function to send a downlink message to the wireless network device #1.

For example, the wireless network device #1 may send, to the AMF by using the path switch message, a RAN NGAP ID allocated by the wireless network device #1 to the terminal device. The AMF further sends the RAN NGAP ID of the terminal device to the first control plane network function, where the RAN NGAP ID is used by the first control plane network function to determine a mapping relationship between the RAN NGAP ID and an IMSI. In a subsequent downlink message, the first control plane network function may include the RAN NGAP ID, where the RAN NGAP ID is used by a target wireless network device to determine the context of the terminal device.

S1170: The AMF sends a path switch response message to the wireless network device #1.

S1180: The wireless network device #1 sends a terminal device context release message to the wireless network device #3.

In this technical solution, when the terminal device is in the inactive state, the terminal device may obtain, via the accessed wireless network device #1 from the wireless network device #3 that stores the context of the terminal device, the context of the terminal device, so that the terminal device can restore to the connected state. In this way, communication between the terminal device and a radio access network can be more efficiently implemented.

In a possible implementation, when a terminal device is in a connected state, a radio link failure may occur, the terminal device may request a wireless network device #1 to reestablish a connection, and the wireless network device #1 may obtain a context of the terminal device via a wireless network device #4. The wireless network device #4 stores the context of the terminal device, including an ID or an address of a previously allocated NF, and the NF includes a first control plane network function and a second control plane network function.

It should be noted that the foregoing signaling name is merely an example for description. This is not limited in this embodiment of this application.

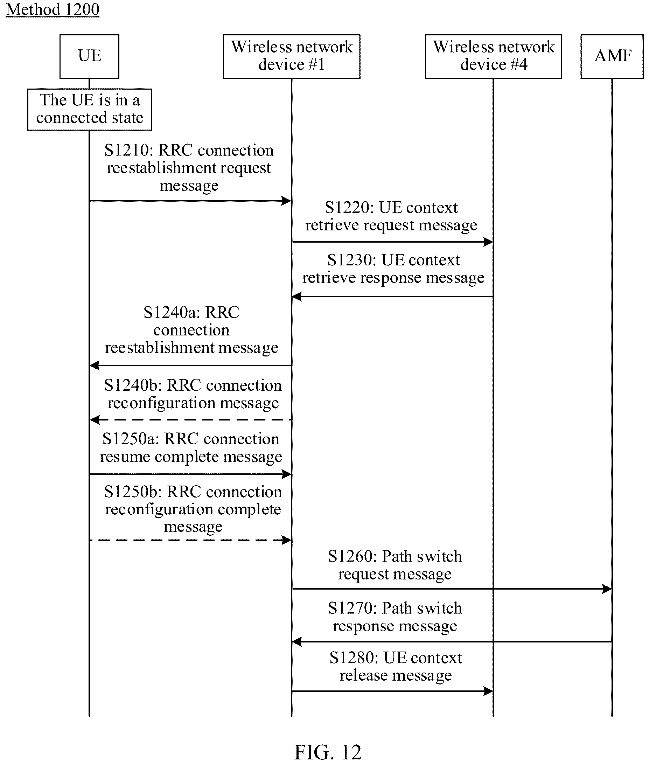

FIG. 12 is a schematic flowchart of requesting reestablishment by a terminal device in a connected state.

Specific steps include the following steps S1210 to S1280.

S1210: The terminal device sends an RRC connection reestablishment request message to the wireless network device #1.

S1220: The wireless network device #1 sends a terminal device context retrieve (retrieve) request message to the wireless network device #4.

The wireless network device #4 stores the context of the terminal device.

The wireless network device #4 may be a neighboring wireless network device of the wireless network device #1.

The currently accessed wireless network device #1 may request the context of the terminal device from the wireless network device #4.

For example, the wireless network device #4 may be a last serving gNB.

It should be understood that the wireless network device #4 may be a serving cell before the radio link failure occurs on the terminal device. After the radio link failure occurs, the terminal device may select a serving cell with a strong signal (the wireless network device #1) to request RRC connection reestablishment.

S1230: The wireless network device #4 sends a terminal device context retrieve response message to the wireless network device #1.

The wireless network device #4 sends, to the wireless network device #1 by using the terminal device context retrieve response message, an ID or an address of an NF serving the terminal device, where the ID or the address is used by the wireless network device #1 to send an uplink message to the NF.

The wireless network device #1 may reestablish an RRC connection, or may reconfigure the RRC connection. S1240a or S1240b is as follows.

S1240a: The wireless network device #1 sends an RRC connection reestablishment message to the terminal device.

The terminal device completes the RRC connection reestablishment.

S1240b: The wireless network device #1 sends an RRC connection reconfiguration message to the terminal device.

The terminal device completes RRC connection reconfiguration.

S1250a: The terminal device sends an RRC connection reestablishment complete message to the wireless network device #1.

Corresponding to S1240a, after completing the RRC connection reestablishment, the terminal device sends the RRC connection reestablishment complete message to the wireless network device #1.

S1250b: The terminal device sends an RRC connection reconfiguration complete message to the wireless network device #1.

Corresponding to S1240b, after completing the RRC connection reconfiguration, the terminal device sends the RRC connection reconfiguration complete message to the wireless network device #1.

S1260: The wireless network device #1 sends a path switch request message to an AMF.

For example, the wireless network device #1 may send ID information or address information of the wireless network device #1 to the AMF by using the path switch request message. The AMF further sends the ID information or the address information of the wireless network device #1 to another NF (the first control plane network function), where the ID information or the address information is used by the first control plane network function to send a downlink message to the wireless network device #1.

For example, the wireless network device #1 may send, to the AMF by using the path switch message, a RAN NGAP ID allocated by the wireless network device #1 to the terminal device. The AMF further sends the RAN NGAP ID of the terminal device to the first control plane network function, where the RAN NGAP ID is used by the first control plane network function to determine a mapping relationship between the RAN NGAP ID and an IMSI. In a subsequent downlink message, the first control plane network function may include the RAN NGAP ID, where the RAN NGAP ID is used by a target wireless network device to determine the context of the terminal device.

S1270: The AMF sends a path switch response message to the wireless network device #1.

S1280: The wireless network device #1 sends a terminal device context release message to the wireless network device #4.

It should be noted that the foregoing signaling name is merely an example for description. This is not limited in this embodiment of this application.

In this technical solution, when the radio link failure occurs on the terminal device in the connected state, the terminal device may obtain, via the accessed wireless network device #1 from the wireless network device #4 that stores the context of the terminal device, the context of the terminal device, so that a connection can be reestablished. In this way, communication between the terminal device and a radio access network can be more efficiently implemented.

In this application, a terminal device may be handed over to a wireless network device and/or a core network device.

In a possible implementation, after the terminal device goes beyond a service range of a currently accessed source wireless network device, the terminal device is handed over to a target wireless network device, and a core network device is not switched.

For example, in this case, the terminal device is handed over from the source wireless network device to the target wireless network device, and the core network device may obtain address information or ID information of the target wireless network device, where the address information or the ID information is used by the target wireless network device to directly communicate with a first control plane network function.

In a specific manner, the target wireless network device may send indication information of an identifier or an address of the target wireless network device to the first control plane network function.

In a specific manner, a second control plane network function may send indication information of an identifier or an address of the target wireless network device to the first control plane network function.

In a specific manner, the terminal device may send indication information of an identifier or an address of the target wireless network device to the first control plane network function.

For example, in this case, the terminal device is handed over from the source wireless network device to the target wireless network device. An identifier allocated by the target wireless network device to the terminal device may be a RAN NGAP ID'. The target wireless network device may send the RAN NGAP ID' to the first control plane network function via the second control plane network function, where the RAN NGAP ID' is used by the first control plane network function to determine a mapping relationship between the RAN NGAP ID' and an IMSI. In a subsequent downlink message, the first control plane network function may include the RAN NGAP ID', and the target wireless network device determines a context of the terminal device based on the RAN NGAP ID'.

In a possible implementation, an AMF may reallocate a core network device to the terminal device, the terminal device may be handed over to a target core network device, and a wireless network device is not switched.

For example, in this case, when the core network device is switched, for example, a first control plane network function is switched to a target first control plane network function, the wireless network device may obtain an address or an ID of the first control plane network function, where the address or the ID is used by the wireless network device to directly communicate with the target first control plane network function.

In a specific manner, a second control plane network function sends indication information of the identifier or the address of the target first control plane network function to the wireless network device.

In a specific manner, the target first control plane network function sends indication information of the identifier or the address of the target first control plane network function to the wireless network device.

In a specific manner, the terminal device sends indication information of the identifier or the address of the target first control plane network function to the wireless network device.

For example, in this case, the first control plane network function is switched to the target first control plane network function, and an identifier allocated by the target first control plane network function to the terminal device may be a CN NGAP ID'. The target first control plane network function may send the CN NGAP ID' to the wireless network device, where the CN NGAP ID' is used by the wireless network device to determine a mapping relationship between the CN NGAP ID' and a TMSI. In a subsequent uplink message, the wireless network device may include the CN NGAP ID', and the target first control plane network function determines a context of the terminal device based on the CN NGAP ID'.

In a possible implementation, the terminal device may be handed over to a target wireless network device, and a core network device may be switched to a target core network device.

For example, in this case, the terminal device is handed over from a source wireless network device to the target wireless network device, and the core network device may obtain address information or ID information of the target wireless network device, where the address information or the ID information is used by the target wireless network device to directly communicate with a first control plane network function. When the core network device is switched, for example, the first control plane network function is switched to a target first control plane network function, and a second control plane network function is switched to a target second control plane network function, the target wireless network device may obtain an address or an ID of the first control plane network function, where the address or the ID is used by the target wireless network device to directly communicate with the target first control plane network function.

When core network devices are switched, a part or all of the core network devices may be switched. For example, the AMF is switched, and an SMF, a UPF, an LMF, and the like remain unchanged. For another example, the AMF remains unchanged, and an SMF, a UPF, an LMF, and the like are switched. It may be understood that any one of the second control plane network function and/or the first control plane network function may be switched. The following implementation is described by using an example in which the second control plane network function is switched.

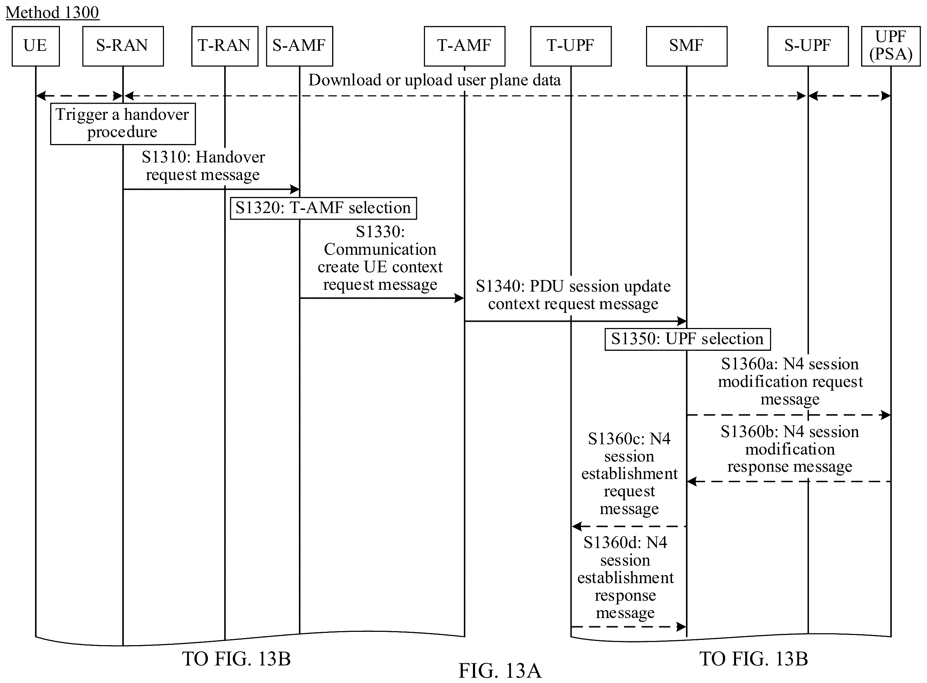

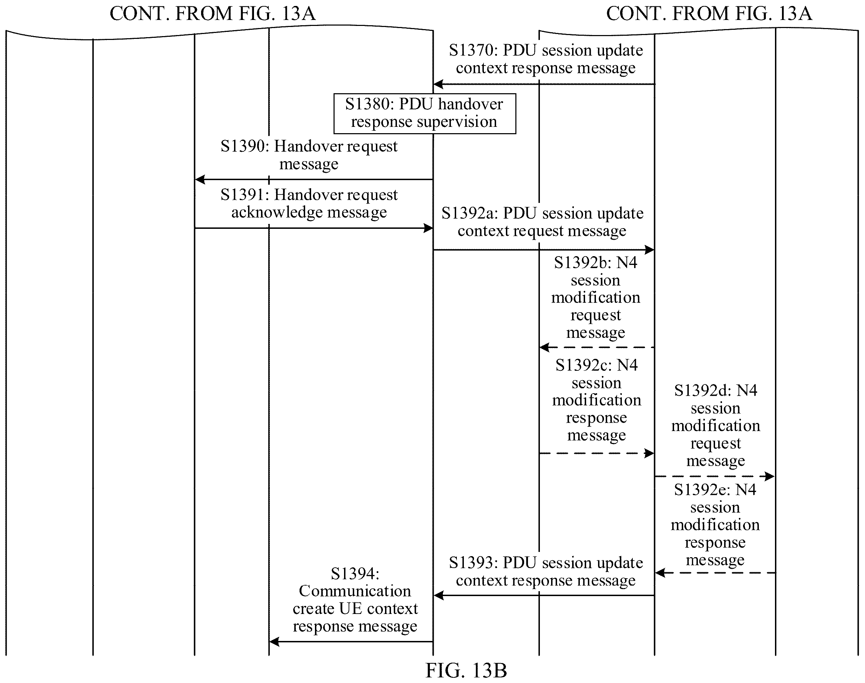

FIG. 13A and FIG. 13B are a schematic flowchart of switching of both a wireless network device and a core network device.

In this embodiment, for example, a source wireless network device is an S-RAN, a target wireless network device is a T-RAN, a source second control plane network function is an S-AMF, a target second control plane network function is a T-AMF, and a first control plane network function is an SMF. An S-UPF is switched to a T-UPF, and the SMF is not switched.

After the terminal device accesses the S-RAN, the S-RAN initiates a handover procedure.

The handover procedure includes the following steps.

S1310: The S-RAN sends a handover request (handover required) message to the S-AMF.

S1320: The S-AMF performs T-AMF selection.

S1330: The S-AMF sends a communication create terminal device context request message (Namf Communication _CreateUEContext Request) to the T-AMF.

S1340: The T-AMF sends a PDU session update context request message (Nsmf_PDUSession_UpdateSMContext Request) to the SMF.

S1350: The SMF performs UPF selection.

S1360a: The SMF sends an N4 session modification request message (N4 Session Modification Request) to a UPF (PSA).

S1360b: The UPF (PSA) sends an N4 session modification response message (N4 Session Modification Response) to the SMF.

S1360c: The SMF sends an N4 session establishment request message (N4 Session Establishment Request) to the T-UPF.

S1360d: The T-UPF sends an N4 session establishment response message (N4 Session Establishment Response) to the SMF.

S1370: The SMF sends a PDU session update context response message (Nsmf_PDUSession_UpdateSMContext Response) to the T-AMF.

S1380: The T-AMF performs PDU handover response supervision (PDU Handover Response supervision).

S1390: The T-AMF sends a handover request message (Handover Request) to the T-RAN.

S1391: The T-RAN sends a handover request acknowledge message (Handover Request Acknowledge) to the T-AMF.

S1392a: The T-AMF sends the PDU session update context request message (Nsmf_PDUSession_UpdateSMContext Request) to the SMF.

S1392b: The SMF sends an N4 session modification request message (N4 Session Modification Request) to the T-UPF.

S1392c: The T-UPF sends an N4 session modification response message (N4 Session Modification Response) to the SMF.

S1392d: The SMF sends an N4 session modification request message (N4 Session Modification Request) to the S-UPF.

S1392e: The S-UPF sends an N4 session modification response message (N4 Session Modification Response) to the SMF.

S1393: The SMF sends a PDU session update context response message (Nsmf_PDUSession_UpdateSMContext Response) to the T-AMF.

S1394: The T-AMF sends a communication create terminal device context response message (Namf_Communication_CreateUEContext Response) to the S-AMF.

In a possible implementation, when the first control plane network function is switched, a target first control plane network function may obtain a communication identifier or a communication address of the target wireless network device in the foregoing procedure.

For example, a communication address or a communication identifier of the T-RAN may be transmitted to the SMF in the foregoing steps S1340 to S1370. When the SMF is switched, a communication address or a communication identifier of the T-RAN may alternatively be transmitted to a T-SMF in the foregoing steps S1340 to S1370.

In a possible implementation, when the first control plane network function is switched, the target wireless network device may obtain a communication identifier or a communication address of a target first control plane network function in the foregoing procedure.

For example, a communication address or a communication identifier of the SMF may be transmitted to the T-RAN in the foregoing steps S1390 and S1391. When the SMF is switched, a communication address or a communication identifier of a T-SMF may alternatively be transmitted to the T-RAN in the foregoing steps S1390 and S1391.

In a possible implementation, when the first control plane network function is switched, the target wireless network device and a target first control plane network function include different identifiers of the terminal device. Therefore, an identifier that is of the terminal device and that is in the target wireless network device and an identifier that is of the terminal device and that is in the target first control plane network function may be associated in a 1^{st} message. A subsequent message may be used for communication based on an association relationship of the identifiers of the terminal device.

The identifier that is of the terminal device and that is in the target wireless network device and the identifier that is of the terminal device and that is in the target first control plane network function may be associated in the foregoing procedure.

For example, in the foregoing steps S1390 and S1391, the T-AMF may obtain a CN NGAP ID' allocated by the target first control plane network function to the terminal device, and forward the CN NGAP ID' to the T-RAN in S1390.

For another example, in the foregoing steps S1390 and S1391, the T-RAN may send, to the T-AMF, a RAN NGAP ID' allocated to the terminal device, and forward the RAN NGAP ID' to the target first control plane network function in S1392a and S1392b.

For another example, in the foregoing steps S1390 and S1391, the T-AMF may send a mapping relationship between an IMSI and a TMSI to the target first control plane network function; and in the foregoing steps S1390 and S1391, the T-AMF may send the mapping relationship between the IMSI and the TMSI to the T-RAN.

In a possible implementation, when the first control plane network function is switched, when the target wireless network device sends an uplink message to a target first control plane network function or a target second control plane network function, the target wireless network device may determine a specific entity to which the uplink message is specifically routed; and when the target first control plane network function or the target second control plane network function sends a downlink message to the terminal device, the target wireless network device may determine a specific terminal device to which the downlink message is specifically routed.

The target wireless network device may route the uplink message or the downlink message in the foregoing procedure.

For example, in the foregoing step S1391, the T-RAN sends, to the T-AMF, an RRC layer uplink message that carries assistance information, and the T-AMF sends the uplink message to the target first control plane network function in the foregoing steps S1392a and S1392b.

For another example, in the foregoing step S1390, the T-AMF may send, to the T-RAN, a downlink message that carries identification information of the terminal device.

In this technical solution, the terminal device may directly communicate with the target first control plane network function after the terminal device is handed over to the target wireless network device, so that a transmission delay caused by the target second control plane network function serving as a proxy for forwarding or processing can be avoided in a handover scenario, and communication efficiency is improved.

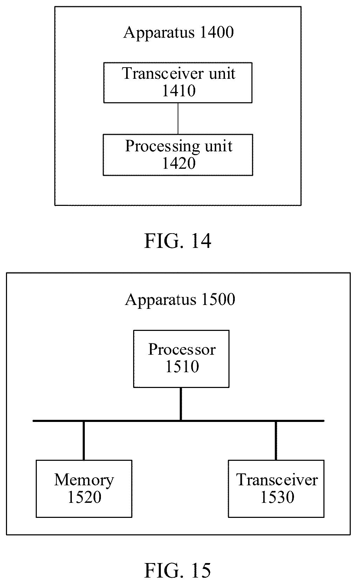

The foregoing describes in detail the methods provided in embodiments of this application with reference to FIG. 6 to FIG. 13A and FIG. 13B. The following describes in detail apparatuses provided in embodiments of this application with reference to FIG. 14 and FIG. 15. It should be understood that descriptions of apparatus embodiments correspond to the descriptions of the method embodiments. Therefore, for content that is not described in detail, refer to the method embodiments. For brevity, details are not described herein again.

The apparatus is configured to implement the foregoing embodiments and related implementations, and details that have been described are not described again. As used below, the term "module" is a combination of software and/or hardware that can implement a predetermined function. Although the apparatus described in the following embodiments is preferably implemented by software, implementation of hardware or a combination of software and hardware may also be conceived.

FIG. 14 is a diagram of a communication apparatus 1400 according to an embodiment of this application.

The apparatus 1400 includes a transceiver unit 1410. The transceiver unit 1410 may be configured to implement a corresponding communication function. The transceiver unit 1410 may also be referred to as a communication interface or a communication unit.

The apparatus 1400 may further include a processing unit 1420. The processing unit 1420 may be configured to perform data processing.

Optionally, the apparatus 1400 may further include a storage unit. The storage unit may be configured to store instructions and/or data, and the processing unit 1420 may read the instructions and/or the data in the storage unit, so that the apparatus implements actions of different devices in the foregoing method embodiments.

In a design, the apparatus 1400 is configured to perform actions performed by the first wireless network device in the foregoing method embodiments.

Specifically, the processing unit 1420 is configured to obtain first indication information, where the first indication information indicates a first control plane network function serving a terminal device, and the first control plane network function is a network function determined based on a second control plane network function. The processing unit 1420 is configured to communicate with the first control plane network function based on the first indication information.

In a design, the apparatus 1400 is configured to perform actions performed by the terminal device in the foregoing method embodiments.

Specifically, the processing unit 1420 is configured to obtain first indication information, where the first indication information indicates a first control plane network function serving the terminal device, the first control plane network function is a network function determined based on a second control plane network function, the first indication information includes a first identifier of the terminal device and at least one of the following information: a type and/or an identifier of the first control plane network function, an address of the first control plane network function, and a session identifier corresponding to the first control plane network function, and the first identifier indicates the terminal device. The processing unit 1420 is further configured to determine, based on the first indication information, the address or the identifier of the first control plane network function serving the terminal device. In a design, the apparatus 1400 is configured to perform actions performed by the third node in the foregoing method embodiments.

In a design, the apparatus 1400 is configured to perform actions performed by the second control plane network function in the foregoing method embodiments.

Specifically, the processing unit 1420 is configured to obtain first indication information, where the first indication information indicates a first control plane network function serving a terminal device, the first control plane network function is a network function determined based on the second control plane network function, the first indication information includes a first identifier of the terminal device and at least one of the following information: a type and/or an identifier of the first control plane network function, an address of the first control plane network function, and a session identifier corresponding to the first control plane network function, and the first identifier indicates the terminal device. The processing unit 1420 is further configured to determine, based on the first indication information, the address of the first control plane network function serving the terminal device or the identifier of the first control plane network function.

In a design, the apparatus 1400 is configured to perform actions performed by the first control plane network function in the foregoing method embodiments.

Specifically, the processing unit 1420 is configured to determine second indication information of a first wireless network device serving a terminal device. The processing unit is further configured to communicate with the first wireless network device based on the second indication information.

In a design, the apparatus 1400 is configured to perform actions performed by the first wireless network device in the foregoing method embodiments.

Specifically, the transceiver unit 1410 is configured to receive a plurality of non-access stratum messages. The processing unit 1420 is configured to separately map the plurality of non-access stratum messages to at least two signaling radio bearers for transmission, where the plurality of non-access stratum messages have a correspondence with the signaling radio bearers.

It should be understood that a specific process in which the units perform the foregoing corresponding steps is described in detail in the foregoing method embodiments. For brevity, details are not described herein again.

FIG. 15 is a diagram of a communication apparatus 1500 according to an embodiment of this application. The apparatus 1500 includes a processor 1510. The processor 1510 is coupled to a memory 1520. The memory 1520 is configured to store a computer program or instructions and/or data. The processor 1510 is configured to: execute the computer program or the instructions stored in the memory 1520, or read the data stored in the memory 1520, to perform the methods in the foregoing method embodiments. As shown in FIG. 15, the apparatus 1500 further includes a transceiver 1530. The transceiver 1530 is configured to receive and/or send a signal. For example, the processor 1510 is configured to control the transceiver 1530 to receive and/or send the signal.

Optionally, there are one or more processors 1510.

Optionally, there are one or more memories 1520.

It should be understood that the processor 1510 and the memory 1520 may be integrated into one processing apparatus. The processor 1510 is configured to execute program code stored in the memory 1520 to implement the foregoing functions. During specific implementation, the memory 1520 may alternatively be integrated into the processor 1510, or may be independent of the processor 1510. It should be understood that the processor 1510 may alternatively correspond to each processing unit in the foregoing communication apparatus, and the transceiver 1530 may correspond to each receiving unit and sending unit in the foregoing communication apparatus.

It should be further understood that the transceiver 1530 may include a receiver (or referred to as a receiver machine) and a transmitter (or referred to as a transmitter machine). The transceiver may further include an antenna, and there may be one or more antennas. The transceiver may alternatively be a communication interface or an interface circuit.

Specifically, the communication apparatus 1500 may correspond to the terminal device and the network device in the method 600 to the method 1300 according to embodiments of this application. The communication apparatus 1500 may include units of the methods performed by the terminal device and the network device in the method 600 to the method 1300. It should be understood that a specific process in which the units perform the foregoing corresponding steps is described in detail in the foregoing method embodiments. For brevity, details are not described herein.

When the communication apparatus 1500 is a chip, the chip includes an interface unit and a processing unit. The interface unit may be an input/output circuit or a communication interface. The processing unit may be a processor, a microprocessor, or an integrated circuit integrated on the chip.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA, the another programmable logic device, the discrete gate or the transistor logic device, or the discrete hardware component, a memory (storage module) may be integrated into the processor.

It should be further noted that the memory described in this specification is intended to include, but is not limited to, these memories and any other memory of a suitable type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or a part of the foregoing embodiments may be implemented by software, hardware, firmware, or any combination thereof. When the software is used for the implementation, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In embodiments of this application, the term such as "example" or "for example" is for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, the terms "when" and "if" mean that a terminal device or a base station may perform corresponding processing in an objective situation, and are not intended to limit time, and the terminal device or the base station is not necessarily required to have a determining action during implementation, and do not mean any other limitation.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." or "at least one type of" in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "comprise", "have", and their variants all mean "including but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments according to this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for communication between a radio access network and a core network, applied to a first wireless network device and comprising:
obtaining first indication information, wherein the first indication information indicates a first control plane network function serving a terminal device, and the first control plane network function is a network function determined based on a second control plane network function; and
communicating with the first control plane network function based on the first indication information.

2. The method according to claim 1, wherein the obtaining the first indication information comprises:
obtaining the first indication information locally or receiving the first indication information from a first network element, wherein the first indication information comprises a first identifier of the terminal device and at least one of the following information: a type and/or an identifier of the first control plane network function, an address of the first control plane network function, and a session identifier corresponding to the first control plane network function, the first identifier indicates the terminal device, and the first network element comprises one of the second control plane network function, the first control plane network function, the terminal device, a second wireless network device, and a network management network element.

3. The method according to claim 2, wherein the method further comprises:
determining the first indication information based on the first identifier; and
sending the first identifier to the first control plane network function based on the first indication information.

4. The method according to any one of claims 1 to 3, wherein the method further comprises:
sending address information and/or identification information of the first wireless network device to the first control plane network function or the terminal device.

5. The method according to any one of claims 1 to 4, wherein the method further comprises:
receiving a second identifier of the terminal device from the second control plane network function, wherein the second identifier is a communication identifier that is allocated by the first control plane network function to the terminal device and that is in a service range of the first control plane network function; and
determining a mapping relationship between a third identifier and the second identifier of the terminal device, wherein the third identifier is an identifier that is of the terminal device and that is identifiable by the first wireless network device, and the mapping relationship is used by the first wireless network device to determine a context of the terminal device based on the second identifier.

6. The method according to any one of claims 1 to 4, wherein the method further comprises:
sending a fourth identifier of the terminal device to the first control plane network function via the second control plane network function, wherein the fourth identifier is a communication identifier that is allocated by the first wireless network device to the terminal device and that is in a service range of the first wireless network device.

7. The method according to any one of claims 1 to 4, wherein the method further comprises:
receiving the fifth identifier and a second identifier from the first control plane network function, wherein the second identifier is a communication identifier that is allocated by the first control plane network function to the terminal device and that is in a service range of the first control plane network function, and the fifth identifier is an identifier that is of the terminal device and that is identifiable by the first control plane network function;
determining a first mapping relationship, wherein the first mapping relationship comprises a mapping relationship between a third identifier and the fifth identifier, and the third identifier is an identifier that is of the terminal device and that is identifiable by the first wireless network device; and
determining a second mapping relationship between the second identifier and the third identifier based on the fifth identifier, the second identifier, and the first mapping relationship.

8. The method according to claim 7, wherein the method further comprises:
determining a context of the terminal device based on the second mapping relationship; or determining a context of the terminal device based on a fourth identifier, wherein the fourth identifier is a communication identifier that is allocated by the first wireless network device to the terminal device and that is in a service range of the first wireless network device.

9. The method according to any one of claims 1 to 4, wherein the method further comprises:
sending a third identifier and a fourth identifier of the terminal device to the first control plane network function, wherein the third identifier is an identifier that is of the terminal device and that is identifiable by the first wireless network device, the fourth identifier is a communication identifier that is allocated by the first wireless network device to the terminal device and that is in a service range of the first wireless network device, the third identifier and the fourth identifier are used by the first control plane network function to determine a third mapping relationship between the fourth identifier and a fifth identifier, and the fifth identifier is a unique identifier that is of the terminal device and that is identifiable by the first control plane network function; and
sending the fourth identifier or a second identifier to the first control plane network function, wherein the second identifier is a communication identifier that is allocated by the first control plane network function to the terminal device and that is in a service range of the first control plane network function, the fourth identifier is used by the first control plane network function to determine a context of the terminal device based on the third mapping relationship, and the second identifier is used by the first control plane network function to determine the context of the terminal device.

10. The method according to any one of claims 1 to 9, wherein the method further comprises:
receiving a first message sent by the terminal device, wherein the first message is a radio resource control RRC message, the first message comprises assistance information, and the assistance information comprises at least one of the following: a type of the message, the type of the first control plane network function and/or a type of the second control plane network function, the identifier or the address of the first control plane network function and/or an identifier or an address of the second control plane network function, and the session identifier corresponding to the first control plane network function; and
communicating with the first control plane network function and/or the second control plane network function based on the assistance information.

11. The method according to any one of claims 1 to 10, wherein
when the terminal device stores the first indication information, the first network element is the terminal device; or
when the terminal device does not store the first indication information, the first network element is the first control plane network function or the second control plane network function.

12. A method for communication between a radio access network and a core network, applied to a terminal device and comprising:
obtaining first indication information, wherein the first indication information indicates a first control plane network function serving the terminal device, the first control plane network function is a network function determined based on a second control plane network function, the first indication information comprises a first identifier of the terminal device and at least one of the following information: a type and/or an identifier of the first control plane network function, an address of the first control plane network function, and a session identifier corresponding to the first control plane network function, and the first identifier indicates the terminal device; and
determining, based on the first indication information, the address or the identifier of the first control plane network function serving the terminal device.

13. The method according to claim 12, wherein the obtaining the first indication information comprises:
receiving the first indication information sent by the first control plane network function, the second control plane network function, a first wireless network device, a second wireless network device, or a network management network element, wherein the first wireless network device is a wireless network device serving the terminal device.

14. The method according to claim 13, wherein when the first indication information is received from the first wireless network device or the second wireless network device, the method further comprises:
sending the first indication information to the first control plane network function or the second control plane network function.

15. The method according to any one of claims 12 to 14, wherein the method further comprises:
when the terminal device enters an idle state or an inactive state from a connected state, storing the first indication information.

16. The method according to claim 13, wherein when the first indication information is received from the first control plane network function or the second control plane network function, the method further comprises:
sending the first indication information to the first wireless network device.

17. The method according to any one of claims 12 to 16, wherein the method further comprises:
receiving address information and/or identification information of the first wireless network device from the first wireless network device; and
storing the address information and/or the identification information of the first wireless network device.

18. The method according to any one of claims 12 to 17, wherein the method further comprises:
sending a first message to the first wireless network device, wherein the first message is a radio resource control RRC message, the first message comprises assistance information, and the assistance information comprises at least one of the following: a type of the message, the type of the first control plane network function and/or a type of the second control plane network function, the identifier or the address of the first control plane network function and/or an identifier or an address of the second control plane network function, and the session identifier corresponding to the first control plane network function.

19. A method for communication between a radio access network and a core network, applied to a first control plane network function, wherein the first control plane network function is a network function determined based on a second control plane network function, and the method comprises:
obtaining second indication information, wherein the second indication information indicates a first wireless network device serving a terminal device; and
communicating with the first wireless network device based on the second indication information.

20. The method according to claim 19, wherein the obtaining the second indication information comprises:
obtaining the second indication information locally or receiving the second indication information sent by a second network element, wherein the second indication information comprises at least one of the following: a first identifier of the terminal device and address information and/or identification information of the first wireless network device, the second network element comprises one of the second control plane network function, the first wireless network device, the terminal device, a second wireless network device, or a network management network element, and the first identifier indicates the terminal device.

21. The method according to claim 19 or 20, wherein the method further comprises:
sending first indication information to the terminal device or the first wireless network device, wherein the first indication information comprises the first identifier of the terminal device and at least one of the following information: a type and/or an identifier of the first control plane network function, an address of the first control plane network function, and a session identifier corresponding to the first control plane network function.

22. The method according to any one of claims 19 to 21, wherein the method further comprises:
sending a second identifier of the terminal device to the first wireless network device, wherein the second identifier is a communication identifier that is allocated by the first control plane network function to the terminal device and that is in a service range of the first control plane network function.

23. The method according to any one of claims 19 to 21, wherein the method further comprises:
receiving a fourth identifier of the terminal device from the first wireless network device, wherein the fourth identifier is a communication identifier that is allocated by the first wireless network device to the terminal device and that is in a service range of the first wireless network device; and
determining a mapping relationship between the fourth identifier and a fifth identifier of the terminal device, wherein the fifth identifier is a unique identifier that is of the terminal device and that is identifiable by the first control plane network function, and the mapping relationship is used by the first control plane network function to determine, based on the fifth identifier, a context corresponding to the terminal device.

24. The method according to any one of claims 19 to 21, wherein the method further comprises:
receiving a third identifier and a fourth identifier of the terminal device from the first wireless network device, wherein the third identifier is a unique identifier that is of the terminal device and that is identifiable by the first wireless network device, and the fourth identifier is a communication identifier that is allocated by the first wireless network device to the terminal device and that is in a service range of the first wireless network device;
determining a first mapping relationship, wherein the first mapping relationship comprises a mapping relationship between the third identifier and a fifth identifier, and the fifth identifier is a unique identifier that is of the terminal device and that is identifiable by the first control plane network function; and
determining a third mapping relationship between the fourth identifier and the fifth identifier based on the third identifier, the fourth identifier, and the first mapping relationship.

25. The method according to claim 24, wherein the method further comprises:
determining a context of the terminal device based on the third mapping relationship; or determining a context of the terminal device based on a second identifier, wherein the second identifier is a communication identifier that is allocated by the first control plane network function to the terminal device and that is in a service range of the first control plane network function.

26. The method according to any one of claims 19 to 21, wherein the method further comprises:
sending a fifth identifier and a second identifier of the terminal device to the first wireless network device, wherein the second identifier is a communication identifier that is allocated by the first control plane network function to the terminal device and that is in a service range of the first control plane network function, the fifth identifier is an identifier that is of the terminal device and that is identifiable by the first control plane network function, the second identifier and the fifth identifier are used by the first wireless network device to determine a second mapping relationship between the second identifier and the third identifier, and the third identifier is an identifier that is of the terminal device and that is identifiable by the first wireless network device; and
sending the second identifier or a fourth identifier to the first wireless network device, wherein the fourth identifier is a communication identifier that is allocated by the first wireless network device to the terminal device and that is in a service range of the first wireless network device, the second identifier is used by the first wireless network device to determine a context of the terminal device based on the second mapping relationship, and the fourth identifier is used by the first wireless network device to determine the context of the terminal device.

27. A communication system, comprising a first wireless network device, a first control plane network function, and a second control plane network function, wherein the first control plane network function is a network function determined based on the second control plane network function;
the second control plane network function is configured to determine the first control plane network function serving a terminal device;
the first wireless network device is configured to obtain first indication information, wherein the first indication information indicates the first control plane network function serving the terminal device;
the first control plane network function is configured to obtain second indication information, wherein the second indication information indicates the first wireless network device serving the terminal device;
the first wireless network device is further configured to communicate with the first control plane network function based on the first indication information; and
the first control plane network function is further configured to communicate with the first wireless network device based on the second indication information.

28. A communication apparatus, wherein the communication apparatus is configured to perform the method according to any one of claims 1 to 26.

29. A communication apparatus, comprising:
a processor, configured to execute a computer program stored in a memory, to enable the apparatus to perform the method according to any one of claims 1 to 26.

30. The apparatus according to claim 29, wherein the apparatus further comprises the memory.

31. A computer-readable storage medium, wherein the computer-readable storage medium stores a computer program; and when the computer program is run on a computer, the computer is enabled to perform the method according to any one of claims 1 to 26.

32. A computer program product, wherein the computer program product comprises instructions for performing the method according to any one of claims 1 to 26.

33. A chip system, comprising a processor, configured to: invoke a computer program from a memory, and run the computer program, to enable a communication device on which the chip system is installed to perform the method according to any one of claims 1 to 26.
